# EUROPEAN PATENT APPLICATION

(11) **EP 2 631 805 A1**
(43) Date of publication of application: **28.08.2013**
(21) Application number: 11834002.5
(22) Date of filing: 06.10.2011
(51) Int. Cl.: G06F 12/00, G06F 3/06, G06F 13/10

(54) **STORAGE-SERVICE-PROVISION DEVICE, SYSTEM, SERVICE-PROVISION METHOD, AND SERVICE-PROVISION PROGRAM**

(30) Priority: 22.10.2010 JP 2010237828
(71) Applicant: Intec Inc., Toyama-shi, Toyama 930-8577 (JP)
(72) Inventor: NAKAGAWA, Ikuo, Tokyo 136-8637 (JP)
(74) Representative: Jackson, Jonathan Andrew
(86) International application number: PCT/JP2011/005629
(87) International publication number: WO 2012/053156

(57) **Abstract**

Many storage apparatuses are used to allow a large number of files of various sizes to be stored, with single-point-of-failure factors in the system reduced.

A storage service provision apparatus (3) provides a service to store a file by means of a plurality of storage apparatuses (4) connected therewith over a network. A file to be written is divided into one or more pieces of data, and object identification information is assigned to each data component of the file (block object). Information for constructing the file using data of each block object (a management information object) is created, and object identification information is assigned to the management information object. Each block object and the management information object are then transmitted to and stored on their respective storage apparatuses (4) of the plurality of storage apparatuses (4) determined based on their own object identification information.

## Description

### RELATED APPLICATION

This application claims the benefit of Japanese Patent Application No. 2010-237828 filed on October 22, 2010 in Japan, the contents of which are incorporated herein by reference.

### TECHNICAL FIELD

The present invention relates to a distributed storage technology that allows a large amount of files to be stored by means of many computers.

### BACKGROUND ART

In conventional computer use, users such as companies and individuals have possessed and managed their hardware, software, data, and the like, whereas in cloud computing, which has become popular in recent years, users get services from the other side (a data center or the like) of a network that their own equipment is connected to. Such cloud services are provided by cloud service providers to companies or individuals, or are provided in corporate networks to company members and the like.

Among cloud services, Amazon S3 (Simple Storage Service), Microsoft Windows (trademark) Azure, and the like are known as storage services for storing user data on servers on a network. In particular, the Google File System (GFS) is known (e.g. see Non-patent document 1) as a distributed file system that can store data on many storages in a distributed way and, even if large data of the order of GB (gigabytes) and small data are mixed in large numbers, can handle them efficiently.

The GFS divides a file into blocks of 64 MB (megabytes) called chunks and places them onto a plurality of chunk servers in a distributed way, thereby writing or reading one file on the plurality of servers in parallel to fasten input and output of the file. The system can therefore handle a large file size as long as there are a lot of servers. The system is configured to control three or more copies to be held on different servers for every chunk, thus allows fault tolerance to be improved by, even when one chunk server is in failure, using a copy stored on another chunk server, and also allows the load to be distributed by accessing one copy selected from a plurality of copies of a chunk.

### PRIOR ART DOCUMENT

### Non-patent document

Non-patent document 1: Keisuke Nishida, "Google wo sasaeru gijutsu - Kyodai system no uchigawa no sekai (Technology supporting Google - Inside world of the huge system)," Gijutsu-Hyohron Co., Ltd., August 25, 2008

### SUMMARY OF THE INVENTION

### Problems to be solved by the invention

In the GFS described above, a master server stores management information for managing the mapping indicating which chunk server each of a plurality of chunks composing one file (and also each of three or more copies for each chunk) is stored on. Therefore, when a file is read, a process is executed in which: a chunk to be read is determined; the master server is inquired for the address of a server storing the determined chunk; and the chunk server whose address is indicated by the reply is accessed, and when a file is written, a process is executed in which: a chunk to be written is determined; the master server is inquired for the address of a server to store the determined chunk; and the chunk server whose address is indicated by the reply is accessed. Chunk server switching and re-creation of copies in the event of failure, load distribution for accesses to chunk servers, additional creation of copies, and the like are all also executed in accordance with instructions from the master server having management information.

Such a mechanism, where the master server having management information is the single point of failure in the distributed storage system, has a problem in which the whole system ceases to operate when a failure occurs in the master server. Another problem is that the load concentration on the master server will be a bottleneck, limiting the scalability and performance.

The GFS has an additional special mechanism for increasing redundancy of the master server and, when the master server is in failure, allows a backup server to take over the master server's function through a given operation to prevent the single point of failure from being noticed. The GFS can do this probably because it is specialized for use as storage and search services for Web pages over the Internet. Distributed storage technologies have a wide variety of uses, and it is desirable to realize a system having no single point of failure to further improve fault tolerance.

The length of chunks is fixed in the GFS, and management information indicating the mapping between each chunk and each server becomes massive in size when the file size (the length of data of a file) becomes huge. This makes it difficult to quickly find a chunk to be partially accessed from the large management information, leading to a poor random access ability, which is another problem.

Moreover, any existing storage service, be it the GFS or Amazon S3, requires one service provider to manage and operate all the service-providing equipment. From storage service users' point of view, a user has to select only one service provider to get a service, and the entire process the user wish to do by using a storage service will undesirably depend on the reliability and quality of service of the one selected provider.

A purpose of the invention made in view of the above-mentioned circumstances is to provide a distributed storage technology that allows a large number of files of various sizes to be stored by using many computers and can reduce single-point-of-failure factors in the system. Another purpose of the invention is to allow this distributed storage technology to achieve speedups in access to files, improve the performance of random access, or the like, or to use storage services provided by a plurality of providers to configure one storage service.

### Means for solving the problems

A storage service provision apparatus of an example according to the principle of the invention is connected with a plurality of storage apparatuses over a network and provides a service to store a file by use of the storage apparatuses. The storage service provision apparatus comprises: means for dividing a file to be written into one or more pieces of data and, handling a data component of the file as a block object, assigning object identification information to each block object; means for creating information for constructing the file using data of each block object and, handling the information as a management information object, assigning object identification information to the management information object; means for determining at least one of the plurality of storage apparatuses based on object identification information; and means for transmitting each block object and the management information object to their respective storage apparatuses determined based on their own object identification information, to make them stored there.

### ADVANTAGES OF THE INVENTION

The invention can realize, for example, a storage service for storing and providing a large number of files of various sizes by use of many storage apparatuses as a virtual storage with reduced single-point-of-failure factors in the system and improved scalability.

### BRIEF DESCRIPTION OF THE DRAWINGS

Figure 1 illustrates an example of a distributed storage service provision system (the present system) in an embodiment of the invention;
Figure 2 is a block diagram showing a configuration example of a client apparatus of the present system;
Figure 3 is a block diagram showing a configuration example of a storage apparatus of the present system;
Figure 4 illustrates an example of the function of the present system;
Figure 5 illustrates a concept of the file structure of the present system;
Figure 6 illustrates a concept of the file structure of the present system;
Figure 7 shows a specific example for illustrating the file structure of the present system;
Figure 8 illustrates an example of the mechanism of the present system;
Figure 9 shows an example of file read access in the present system;
Figure 10 shows an example of file write access in the present system;
Figure 11 shows an example of file write access in the present system;
Figure 12 shows an example of file write access in the present system;
Figure 13 shows an example of file write access in the present system;
Figure 14 shows an example of file write access in the present system;
Figure 15 shows an example of a static service table in the present system;
Figure 16 shows an example of a dynamic service table in the present system;
Figure 17 illustrates an example of a method of implementing a dynamic service table in the present system;
Figure 18 illustrates an example of distributed processing on client apparatuses in the present system;
Figure 19 illustrates an example of class information sharing in the present system;
Figure 20 illustrates an example of file write processing using parallel distributed processing in the present system; and
Figure 21 illustrates an example of a feature of the present system.

### MODES OF EMBODYING THE INVENTION

The configuration of the above-described storage service provision apparatus of an example according to the principle of the invention realizes a virtual storage using a plurality of storage apparatuses, allowing a storage service to be provided. Since this configuration uses a plurality of storage apparatuses to store in a distributed way not only data composing a file (block object) but also information for constructing the file from divided data (management information object) as objects, the storage service provision apparatus does not centrally store management information on all blocks of many files, and single-point-of-failure factors in the system can be reduced.

The storage service provision apparatus may, for example, be installed by a cloud service provider on the front end of a plurality of storage apparatuses managed by itself (which may be storage servers or storage devices) or of a plurality of storage apparatuses managed by another one or more service providers (which may be recognized as storage services) to read and write files upon request over a network from an end user using its own service. As another example, the storage service provision apparatus may be installed in a corporate network to use a plurality of storage apparatuses in the same corporate network to read and write files, or the storage service provision apparatus installed in a corporate network may be connected with a data center or the like of one or more storage service providers outside the company to use a plurality of storage apparatuses outside the company to read and write files.

The storage service provision apparatus described above may further comprise: means for determining top object identification information corresponding to a file to be read, and accessing a storage apparatus determined based on the top object identification information to acquire the management information object; means for using information for constructing the file contained in the acquired management information object to determine object identification information of a block object having a data component of the file, and accessing a storage apparatus determined based on the object identification information to acquire the block object; and means for arranging pieces of data contained in acquired block objects in accordance with the information for constructing the file, thereby acquiring the file.

This allows an original file to be acquired by accessing a management information object and block objects stored on a plurality of storage apparatuses in a distributed way.

In the storage service provision apparatus described above, object identification information for determining a storage apparatus may be assigned such that a management information object corresponding to one file and a management information object corresponding to another file are stored on different ones of the plurality of storage apparatuses.

This allows management information to be divided and stored on a plurality of storage apparatuses by assigning object identification information, efficiently reducing single-point-of-failure factors.

The means for determining at least one of the plurality of storage apparatuses based on object identification information of the storage service provision apparatus described above may also determine an access method applicable to a determined storage apparatus, and usage of a storage apparatus connected over the network may be performed by requesting the determined storage apparatus for storage or acquisition of the object assigned with the object identification information in accordance with the determined access method.

This allows storage apparatuses that support different access methods to be mixed to create a virtual storage. For example, there may be various methods such as iSCSI and SAN, for using multiple physical devices as storage apparatuses to create a virtual storage and, even if these physical devices are mixed, each physical device can be accessed by an applicable method.

For another example, there may be various protocols such as http, nfs, ftp, cifs, and rpc as methods for accessing individual servers, for using multiple servers on a network as storage apparatuses to create a virtual storage and, even if these servers are mixed, each server can be accessed via an applicable protocol.

In this case, each of the plurality of storage apparatuses connected with the storage service provision apparatus described above may be storage servers that can operate with the storage service provision apparatus as a client over an optionally-selected access protocol.

For still another example, there may be various systems such as Web services, proprietary protocols using HTTP, and NFS as methods for accessing individual services, for using various services provided by cloud service providers or the like as storage apparatuses to create a virtual storage and, even if these services are mixed, each service can be accessed by an applicable system.

In this case, one and another of the plurality of storage apparatuses connected with the storage service provision apparatus described above may be of storage services provided by different service providers.

This allows storage services provided by a plurality of providers to be used to configure one storage service.

The above configuration allows a storage service with a virtual storage implemented by the storage service provision apparatus to be transparently presented to its end user as one file system, since its internal structure is hidden from the user interface, even if it is a virtual storage comprising a plurality of different physical devices, a plurality of different servers, a plurality of different services, or the like in a mixed manner when seen from its user.

The storage service provision apparatus described above may further comprise means for receiving from a user terminal a write or read request for a file stored by use of the plurality of storage apparatuses, wherein the write or read request is a request of a type used in general-purpose file systems.

This allows a virtual storage implemented by the storage service provision apparatus to be presented to a computer of a user (a user terminal) of a storage service provided by the storage service provision apparatus as a native file system (a normally used general-purpose file system) such as NFS and iSCSI.

In the storage service provision apparatus described above, the management information object may contain: pieces of object identification information of a plurality of block objects having pieces of data composing different parts of a file; and offset information indicating which parts of the file the pieces of data of respective block objects are to be placed in.

Using such management information allows a file to be constructed in accordance with offset information from block objects acquired by independently accessing each of a plurality of storage apparatuses based on each object identification information and therefore, instead of accessing a series of storage apparatuses storing data of a file in turn, allows a plurality of storage apparatuses to be accessed in parallel, leading to high-performance file access.

In the storage service provision apparatus described above, the management information object may include: a first management information object containing: pieces of object identification information of a plurality of block objects having pieces of data composing different parts of one area in a file; and in-area offset information indicating which parts of the one area the pieces of data of respective block objects are to be placed in; and a second management information object containing: object identification information of the first management information object; and in-file offset information indicating where the one area, on which the first management information object has information, is located in the file.

This allows a plurality of management information objects to be virtually placed between the top object identification information corresponding to a file and a block object having a data component of the file so that a recursive structure having two or more levels is built. When the file size is huge and if the number of levels is only one, the amount of management information (a list of object identification information and offset information of respective block objects, in this example) increases and it takes time either to read the entire management information or to search for information on a block object to be accessed and read it selectively. If, however, this enormous management information is divided into a plurality of pieces to generate a plurality of management information objects (called the first management information object in the above description) and if a new management information object (called the second management information object in the above description) containing a list of object identification information and offset information of each management information object is built, these plurality of management information objects, too, can be stored on a plurality of storage apparatuses in a distributed way and be accessed in parallel.

Dividing management information into a plurality of pieces to build a recursive structure having two or more levels in this way allows single-point-of-failure factors to be further reduced and allows file access to be higher-performance. This can realize a truly scalable virtual storage not only because this allows the file size that can be stored to be extended logically limitlessly beyond physical capacities and geographical constraints of devices, but also because this can prevent practical problems from occurring no matter how large the file size is.

In the storage service provision apparatus described above, the management information object may be able to comprise a plurality of management information objects having a recursive structure, and if the number of the block objects is larger than a predetermined number, the depth of the recursive structure may be increased to generate a plurality of management information objects.

This allows the depth of the recursive structure of management information to be increased in accordance with the number of block objects (and thus with the file size), further improving scalability.

In the storage service provision apparatus described above, the management information object may contain a plurality of pieces of object identification information, and a process to request a storage apparatus determined based on one of the plurality of pieces of object identification information for storage or acquisition of the one object and a process to request a storage apparatus determined based on another one of the plurality of pieces of object identification information for storage or acquisition of the another one object may be performed in parallel.

This realizes parallel processing, and therefore can increase file access speed.

In the storage service provision apparatus described above, when part of data of a stored file is updated, a block object whose data is rewritten may be assigned with new object identification information, a management information object containing information for constructing the file from data of the block object may also be assigned with new object identification information, and the new object identification information of the management information object may be set to be determined as top object identification information corresponding to the file, whereby the contents of an object having an identical object identification information may be managed to remain unchanged.

This allows the update of the contents of a file to be fixed by an atomic rewrite (an indivisible rewrite process without any intermediate state) of top object identification information, not rewriting any content of each management information object and each block object which are once generated and assigned with object identification information, and therefore a file can be regarded as being stored completely at all times. That is, even while a new block object and a new management information object presenting post-update file contents are being generated, pre-update file contents are acquired until just before the top object identification information is rewritten, and post-update file contents are acquired immediately after the top object identification information is rewritten.

Consequently, even while a file is being written, the same file (pre-update contents) can be read freely and the contents of an object having an identical object identification information remains unchanged, so that there will be no inconsistency even if each management information object and each block object are copied independently of one another, and thus copies can be easily prepared in the system. Snapshots at various time points (files stored with the state at the respective time points) can also be easily provided by accumulating correspondences between top object identification information and a file before update as a history.

The means for determining at least one of the plurality of storage apparatuses based on object identification information of the storage service provision apparatus described above may be able to determine two or more storage apparatuses, and the storage service provision apparatus may further comprise means for copying each block object and the management information object, and transmitting them to their respective two or more storage apparatuses determined based on their own object identification information, to make them stored there.

This, when a file is written, allows each object to be copied and allows these copies to be stored on a plurality of storage apparatuses in a distributed way.

The storage service provision apparatus described above may further comprise: means for, based on respective object identification information of a management information object and each block object corresponding to a file to be read, determining two or more of the plurality of storage apparatuses storing a relevant object or a copy thereof; and means for accessing one determined storage apparatus and, if there is no response therefrom, accessing another determined storage apparatus to acquire an object or a copy thereof.

This, even if a failure occurs in one storage apparatus, allows a copy of an object that is to be acquired from it to be acquired from another storage apparatus, and therefore allows a user of a service provided by the storage service provision apparatus to continuously use the storage service, allowing fault tolerance to be improved. For example, when storage services provided by a plurality of providers are used as a plurality of storage apparatuses and if a service of one provider goes down, a service of another provider can be used to continuously provide the storage service in an automatic way.

The storage service provision apparatus described above may further comprise: means for, based on respective object identification information of a management information object and each block object corresponding to a file to be read, determining two or more of the plurality of storage apparatuses storing a relevant object or a copy thereof; and means for accessing two or more determined storage apparatuses in parallel, and acquiring an object or a copy thereof from a storage apparatus that has responded earlier.

This allows the redundancy in the system to be exploited for faster file access.

In the storage service provision apparatus described above, when data is partially written to a stored file, which part of the file the data to be written is to be placed in may be specified, and objects related to the specified part may be selected or new objects may be generated among all block objects and management information objects belonging to the file or new objects may be generated. Storage apparatuses respectively determined based on object identification information of the selected or newly generated objects may be accessed, whereas storage apparatuses for other objects may not be accessed.

This allows data in any place in a file to be partially written, allowing for random access.

In the storage service provision apparatus described above, when data is partially read from a stored file, which part of the file the data to be read is placed in may be specified, and objects related to the specified part may be selected among all block objects and management information objects belonging to the file. Storage apparatuses respectively determined based on object identification information of the selected objects may be accessed, whereas storage apparatuses for other object may not be accessed.

This allows data in any place in a file to be partially read, allowing for random access.

In the storage service provision apparatus described above, the file to be written may have been created by a user encrypting an entire original file and may be divided into a plurality of pieces of data, and object identification information for determining a storage apparatus may be assigned such that a block object having one piece of data and a block object having another piece of data of the plurality of pieces of data are stored on different ones of the plurality of storage apparatuses.

This allows a service for keeping and storing a file of a user to be provided at a high security level. That is, since entirely encrypted file data is divided and stored instead of divided data being encrypted and stored, and if only part of such data is acquired by a malicious person, even partial decryption cannot be executed. In particular, when storage services provided by a plurality of providers are used as a plurality of storage apparatuses, both equipment and use authentication or the like often vary from provider to provider and therefore, if the security of one provider is broken, the other providers remain unaffected, so that the possibility of the whole data being acquired by a malicious person can be extremely reduced.

In the storage service provision apparatus described above, the file to be written may have been created by a user encrypting an entire original file and may be divided into a plurality of pieces of data, and object identification information for determining a storage apparatus may be assigned such that a block object having one piece of data of the plurality of pieces of data and the management information object are stored on different ones of the plurality of storage apparatuses.

This also allows a service for keeping and storing a file of a user to be provided at a high security level. This is because a file cannot be decrypted since if a malicious person cannot acquire a management information object, the person cannot construct the file from acquired block objects and cannot find which objects are the other block objects that belong to the same file.

In the storage service provision apparatus described above, the management information object may contain: object identification information of a block object having data composing part of a file; and offset information indicating which part of the file the data of the block object is to be placed in, and when there is a part of the file where no data exists, no block object corresponding to the part where no data exists may be generated, whereas a block object having substantial data and the management information object may be made to be stored. When a file is read and if the management information object indicates that there is no object identification information corresponding to one part of the file, the file may be acquired by placing NUL data in the one part.

This makes it unnecessary to store a block entity for the part of a file where no data exists and therefore allows required storage capacity of storage apparatuses to be reduced to the amount for substantial data only, allowing a sparse file to be easily implemented. Since a storage service sometimes charges in proportion to used capacity, it is good also for users to avoid paying a fee even for capacity with no data.

As seen above, if the structure of a file can be expressed only by a management information object, the apparatus can be used in such a way that, for example, a huge file is created in advance regardless of the volume of data to be actually written, and data is written later to part of the file where no data exists to generate a block object then for the first time.

In the storage service provision apparatus described above, the management information object may contain: object identification information of a block object having data composing part of a file; and offset information indicating which part of the file the data of the block object is to be placed in, and when there is a part of the file where no data exists following a part where data exists, a block object having the substantial data and information on the length of the data and the management information object may be made to be stored. When a file is read and if the length of data to be placed in one part of the file as indicated by the management information object is longer than the length of data indicated by information on the length contained in a block object corresponding to the one part, the file may be acquired by placing NUL data for the shortage of length.

As described above, the use of offset information in a management information object and information on the length of data in a block object also allows required storage capacity of storage apparatuses to be reduced to the amount for substantial data only, allowing a sparse file (a file to part of which no data is written where no data exists) to be implemented.

In the storage service provision apparatus described above, a management information object assigned with top object identification information determined corresponding to a file to be read may contain: information on the entire length of the file; and information indicating which part of the file having the length an object assigned with which object identification information is placed in, if the object assigned with object identification information is also a management information object, the management information object may contain: information on the length of an area where the object is placed in the file; and information indicating which part of the area having the length an object assigned with which object identification information is placed in, and if the object assigned with object identification information is a block object, the block object may have: a data component of the file; and information on the length of the data.

This allows an original file to be constructed from a plurality of blocks stored in a distributed way even if the data size of each block is variable, since the entire length of the file, the length of each area of the file, and the length of data of a block object to be placed in each area become clear in the process of following from top object identification information through a management information object to access a block object. As seen above, the length of data of each block need not be fixed, which can also be utilized in varying the size of stored files.

In the storage service provision apparatus described above, when part of data of a stored file is updated, a block object whose data is to be rewritten and a management information object containing object identification information of the block object, among block objects and management information objects belonging to the file, may be acquired from storage apparatuses storing respective objects and, among the contents of each acquired object, a part not to be changed by the data rewrite may be left intact whereas data may be written to a part to be changed, whereby each new object may be generated and made to be stored on a storage apparatus determined based on object identification information of the each new object.

This allows the operation of an object related to writing a file to be executed by basic instructions, i.e. get (acquire) and put (store).

The means for assigning object identification information of the storage service provision apparatus described above may uniquely assign new object identification information to all block objects and management information objects stored on the plurality of storage apparatuses.

This allows a UUID (Universal Unique Identifier), for example, to be assigned as object identification information, and assigning new object identification information each time the contents of an object are updated also may contribute to the above-described atomic update, reading during file writing, copying, provision of snapshots, and the like.

The means for determining at least one of the plurality of storage apparatuses based on object identification information of the storage service provision apparatus described above may comprise determining one of the plurality of storage apparatuses in accordance with the value of the remainder left when the result of a predetermined calculation made on the value of the object identification information is divided by the number of the plurality of storage apparatuses.

This allows a storage apparatus for storing a certain object to be determined depending on which of the values from 0 to (S-1) the value of the remainder left when a calculation is made on the certain object identification information becomes, where the number of storage apparatuses (physical devices, storage servers, or storage services) is S, for example.

As seen above, such a configuration where which storage apparatus to store each object on can be determined just by making a calculation on object identification information, requiring no management information to be held in the system, is able to further reduce single-point-of-failure factors. For example, information indicating the correspondence between storage apparatuses and access methods is to be held in the system if access methods vary depending on storage apparatuses but, since the amount of this information is limited by the number of storage apparatuses and does not explosively increase along with the numbers of files and objects composing them whereas the above-described management information does, single-point-of-failure factors can be extremely few.

For another example, ranges of value to be covered by each storage apparatus may be assigned in advance (35 or more and less than 49 for Storage B, 49 or more and less than 60 for Storage C, etc.), and a storage apparatus to store a certain object may be determined by which range a value calculated from the certain object identification information (e.g. a hash value) falls within.

In this case, the means for determining at least one of the plurality of storages based on object identification information of the storage service provision apparatus described above may comprise having each of the plurality of storage apparatuses assigned with a range of value to be covered by the each storage apparatus, comparing the result of a predetermined calculation made on the value of the object identification information and a range of value to be covered by each storage apparatus, and thereby determining one of the plurality of storage apparatuses.

This also allows single-point-of-failure factors to be reduced since which storage apparatus to store each object on can be determined just by making a calculation on object identification information. While the above-described method using the value of the remainder is a static method since the number of storage apparatuses is fixed, this method using the value of coverage can dynamically change the coverage and therefore can support the dynamic addition and removal of storage apparatuses.

In that case when a storage apparatus connected over the network is added or removed, the means for determining at least one of the plurality of storage apparatuses based on object identification information of the storage service provision apparatus described above may change the determination method such that an added storage apparatus is to be determined for some of a plurality of pieces of object identification information or that the removed storage apparatus is to be determined for no object identification information.

The correspondence between files and top object identification information in the storage service provision apparatus described above can be management information whose amount increases along with the number of files. There may be the following three methods, for example, as to where to hold this correspondence between files and top object identification information. As for top object identification information, for example, a special ID indicating that the content is empty is assigned to every file when a file is created for the first time; an object ID being unique within the whole system is assigned when the contents are written to a file; and an object ID is rewritten to a new unique object ID when the contents of a file are updated afterward. An object ID may contain information indicating whether the object is a table or a block.

The first method is to hold the above correspondence by means of the storage service provision apparatus itself and, for example, it may be stored under management common with the already-described information indicating the correspondence between storage apparatuses and access methods. In this case, the storage service provision apparatus described above may further comprise means for storing top object identification information corresponding to a file to be read, and a storage apparatus to be accessed first for the file may be determined based on the stored top object identification information.

The second method is to make the above correspondence stored on at least one of the plurality of storage apparatuses determined based on file identification information of the file. In this case, the storage service provision apparatus described above may further comprise means for determining at least one of the plurality of storage apparatuses based on identification information of a file to be read, and a thus determined storage apparatus may store top object identification information corresponding to the file to be read as a kind of a management information object.

The third method is to hold the above correspondence by means of a database or the like connected with the storage service provision apparatus and, for example, top object identification information of a file may be registered in a database that stores attribute information (owner, date and time of creation, date and time of update, title, password, etc.) of each file as one element of the attribute information. In this case, the storage service provision apparatus described above may further comprise means for connecting over a network with an attribute management apparatus that stores top object identification information corresponding to each file along with file attribute information, top object identification information corresponding to a file to be read may be acquired from the attribute management apparatus, and a storage apparatus to be accessed first for the file may be determined based on the acquired top object identification information.

A storage service provision system of an example according to the principle of the invention comprises a client apparatus and a plurality of storage apparatuses connected with the client apparatus over a network, and the client apparatus provides a user with a file storage service. The plurality of storage apparatuses comprise means for storing for each file a plurality of block objects and one or more management information objects individually assigned with object identification information, each of the plurality of block objects having a respective data component of the file divided into a plurality of pieces of data, the management information objects having information for constructing the file using data of each block object, and the client apparatus comprises: means for determining top object identification information corresponding to a file to be read, and accessing a storage apparatus determined based on the top object identification information to acquire the management information object; means for using information for constructing the file contained in the acquired management information object to determine object identification information of a block object having a data component of the file, and accessing a storage apparatus determined based on the object identification information to acquire the block object; and means for arranging pieces of data contained in acquired block objects in accordance with the information for constructing the file, thereby acquiring the file.

While the client apparatus of this system has the function related to reading files of the storage service provision apparatus described above, it may be added with the function related to writing files.

In the storage service provision system described above, the system may have a plurality of client apparatuses, the management information object may contain a plurality of pieces of object identification information, and each of the plurality of client apparatuses may be set to be able to determine the top object identification information corresponding to the file to be read and, independently of the other client apparatuses, may perform a process of requesting acquisition of the management information object based on the top object identification information and a process of requesting acquisition of each object based on the plurality of pieces of object identification information.

This allows the advantage of the plurality of storage apparatuses on the backend storing files in a distributed way to be derived further efficiently since, when there is a concentration of many accesses to a particular file, a plurality of client apparatuses to take accesses from end users can be provided to distribute the access process on the frontend.

The principle of the invention of the storage service provision apparatus described above may also be realized by a storage service provision system, and the principle of the invention of the storage service provision system may also be realized by a storage service provision apparatus operating as a client apparatus in the system. Each means described above may also be configured as a unit.

In addition, the principle of the invention of the storage service provision apparatus or system described above may of course also be realized by a method performed by a storage service provision apparatus, by a method performed by the whole system, by a program for causing a general-purpose computer to operate as the present storage service provision apparatus (or a recording medium on which the program is recorded), or by a program for causing a general-purpose computer system to operate as the present system (or a recording medium on which the program is recorded).

For example, a storage service provision method (related to writing files) according to the principle of the invention is a method for using a computer connected with a plurality of storage apparatuses over a network to provide a service to store a file by use of the storage apparatuses, and the method comprises: dividing a file to be written into one or more pieces of data and, handling a data component of the file as a block object, assigning object identification information to each block object; creating information for constructing the file using data of each block object and, handling the information as a management information object, assigning object identification information to the management information object; and transmitting each block object and the management information object to their respective storage apparatuses of the plurality of storage apparatuses determined based on their own object identification information, to make them stored there.

A storage service provision method (related to reading files) of another example according to the principle of the invention is a method for using a computer connected with a plurality of storage apparatuses over a network to provide a service to acquire a file stored by use of the storage apparatuses, a plurality of block objects and one or more management information objects individually assigned with object identification information being stored for each file, each of the plurality of block objects having a respective data component of the file divided into a plurality of pieces of data, the management information objects having information for constructing the file using data of each block object, and the method comprises: determining top object identification information corresponding to a file to be read, and accessing a storage apparatus determined based on the top object identification information to acquire the management information object; using information for constructing the file contained in the acquired management information object to determine object identification information of a block object having a data component of the file, and accessing a storage apparatus determined based on the object identification information to acquire the block object; and arranging pieces of data contained in acquired block objects in accordance with the information for constructing the file, thereby acquiring the file.

For another example, a storage service provision program (related to writing files) according to the principle of the invention is a program for causing a computer connected with a plurality of storage apparatuses over a network to operate as an apparatus for providing a service to store a file by use of the storage apparatuses, and the program comprises: a program code for dividing a file to be written into one or more pieces of data and, handling a data component of the file as a block object, assigning object identification information to each block object; a program code for creating information for constructing the file using data of each block object and, handling the information as a management information object, assigning object identification information to the management information object; and a program code for transmitting each block object and the management information object to their respective storage apparatuses of the plurality of storage apparatuses determined based on their own object identification information, to make them stored there.

A storage service provision program (related to reading files) of another example according to the principle of the invention is a program for causing a computer connected with a plurality of storage apparatuses over a network to operate as an apparatus for providing a service to acquire a file stored by use of the storage apparatuses, a plurality of block objects and one or more management information objects individually assigned with object identification information being stored for each file, each of the plurality of block objects having a respective data component of the file divided into a plurality of pieces of data, the management information objects having information for constructing the file using data of each block object, and the program comprises: a program code for determining top object identification information corresponding to a file to be read, and accessing a storage apparatus determined based on the top object identification information to acquire the management information object; a program code for using information for constructing the file contained in the acquired management information object to determine object identification information of a block object having a data component of the file, and accessing a storage apparatus determined based on the object identification information to acquire the block object; and a program code for arranging pieces of data contained in acquired block objects in accordance with the information for constructing the file, thereby acquiring the file.

Now, a system of an embodiment of the invention will be described for illustration with reference to the drawings. The embodiment will illustrate, for example, a distributed storage service provision system used for storage services (services to store user data on multiple storages on a network) or other cloud services.

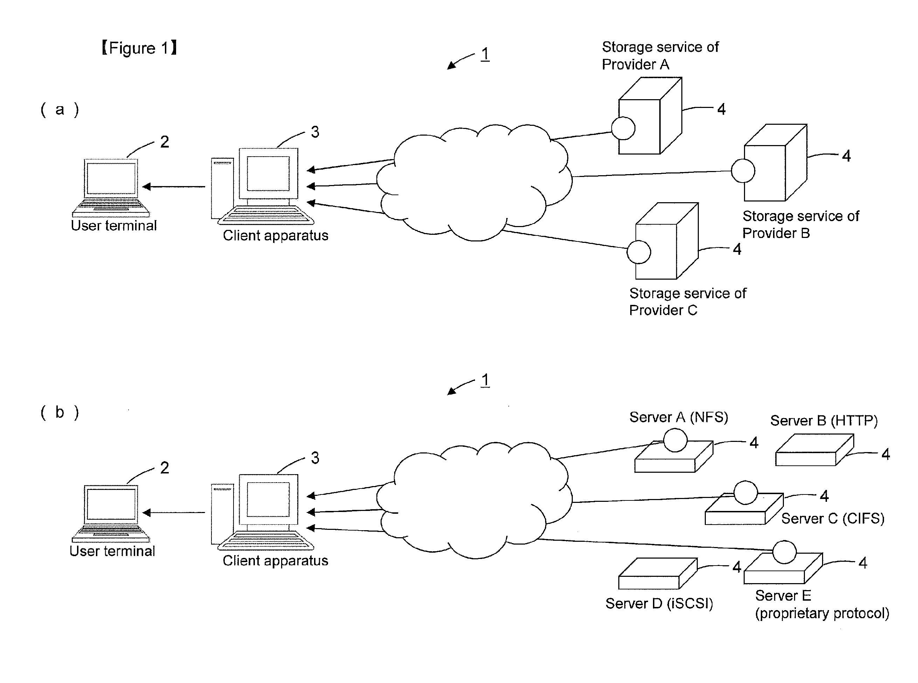

First, a configuration of a distributed storage service provision system (the present system) of the embodiment will be described with reference to the drawings. Figure 1 illustrates a configuration of the present system. As shown in Figure 1, the present system 1 comprises: a user terminal 2 to be used by an end user; a client apparatus 3 to be used by a user (a service provider) of the present system 1; and a plurality of storage apparatuses 4 connected with the client apparatus 3 over a network. The present system provides an end user with a storage service via the client apparatus 3. The client apparatus 3 can therefore be called a storage service provision apparatus. Note here that the user terminal 2 and the client apparatus 3 are computers for example, and the storage apparatuses 4 are, for example, servers installed at providers, in a data center, or the like.

Figure 1(a) illustrates a case where storage services of a plurality of providers (e.g. Providers A to C) are used as a virtual device. Figure 1(b) illustrates a case where storage functions of a plurality of servers (Servers A to E) are used as a virtual device. As shown in Figures 1(a) and 1(b), the present system can handle a virtual file logically with no capacity limitation, by bundling multiple virtual devices. In this case, the system appears as a native file system to the user terminal used by an end user.

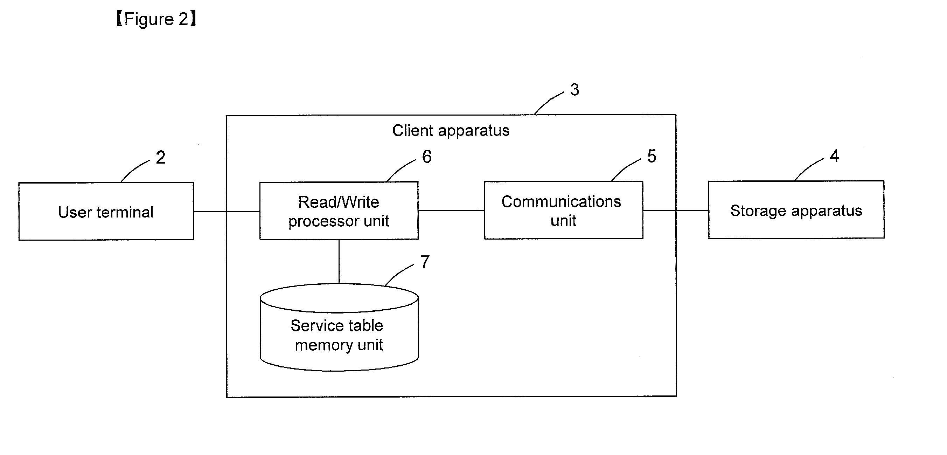

Figure 2 is a block diagram showing a configuration of the client apparatus 3 of the present system. As shown in Figure 2, the client apparatus 3 comprises: a communications unit 5 to communicate with a storage apparatus 4; a read/write processor unit 6 to execute processes of reading and writing files upon request from the user terminal 2; and a service table memory unit 7 to determine a method of accessing the storage apparatus 4.

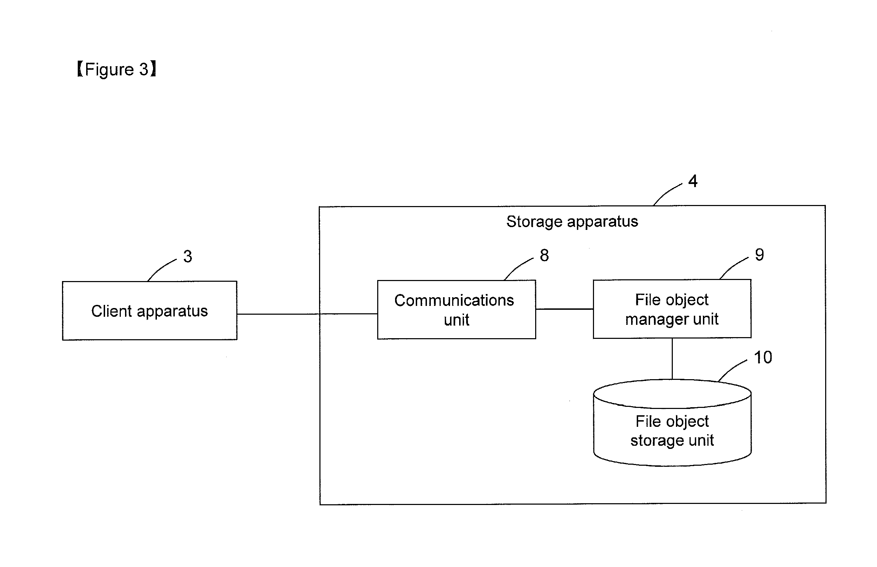

Figure 3 is a block diagram showing a configuration of a storage apparatus 4 of the present system. As shown in Figure 3, the storage apparatus 4 comprises: a communications unit 8 to communicate with the client apparatus 3; a file/object storage unit 10 where files and objects are stored; and a file/object manager unit 9 to manage stored files and objects.

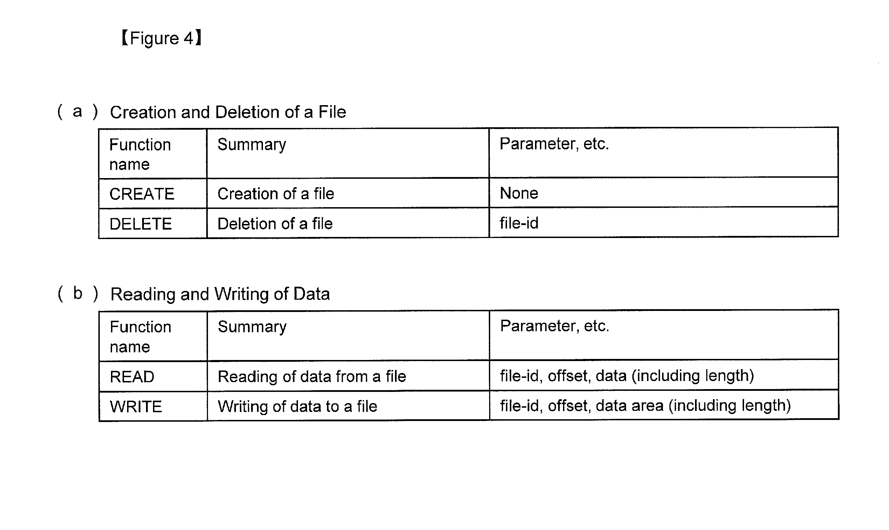

Functions of the present system will next be described. Figure 4 illustrates the functions of the present system. As described above, the present system can be used through the user terminal by an end user as a standard NFS (Network File System) server (e.g. an RFC 1813 server) or the like. The system therefore comprises the following various functions for handling files.

First, as shown in Figure 4(a), the present system has a function called "CREATE" to create a file and a function called "DELETE" to delete a file. The "CREATE" function does not use any particular parameter or the like. The "DELETE" function uses "file-id" as a parameter. Note here that "file-id" is identification information to identify a file.

As shown in Figure 4(b), the present system has a function called "READ" to read data from a file and a function called "WRITE" to write data to a file. The "READ" function uses "file-id," "offset," "data," and the like as parameters. The "WRITE" function uses "file-id," "offset," "data area," and the like as parameters. Note here that "offset" is information indicating which part of a data area to place data in. "data" is data information such as character strings and numeric values, and also contains information on the length of data (length). "data-area" is information on an area to which data is written, and also contains information on the length of data (length) which can be written to the area.

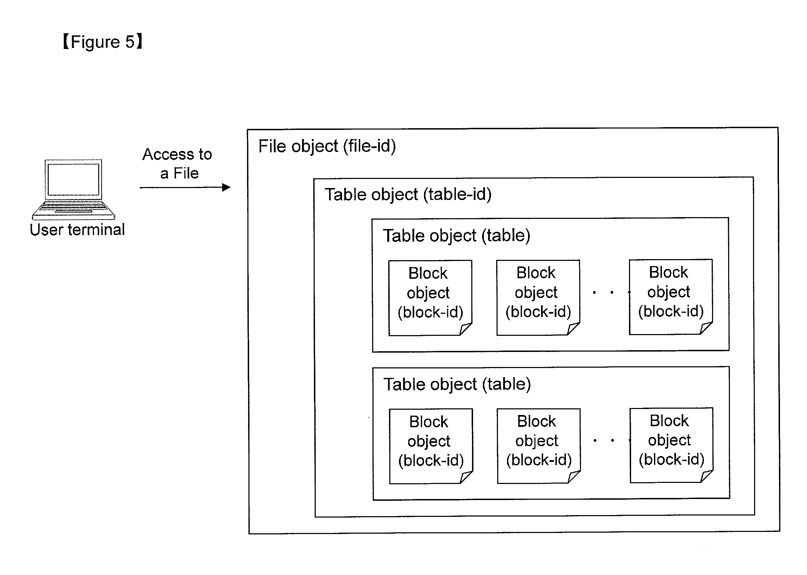

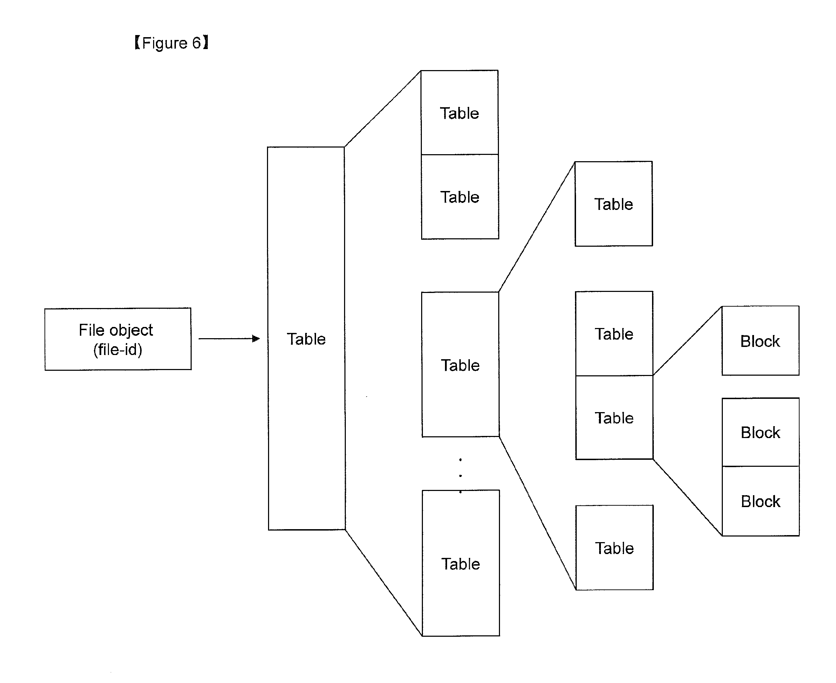

The file structure of the present system will next be described. Figures 5 and 6 are conceptual diagrams of the file structure of the present system. In the present system, a file is represented in a data structure shown in Figure 5. A file accessed by the user terminal has a hierarchical structure comprising a "file object (also simply called a file)," a "table object (also simply called a table)," and a "block object (also simply called a block)." In this case, a "file object" includes a "table object," and a "table object" includes a "block object." As shown in Figure 5, a "table object" may include a "table object." This conceptual diagram abstractly represents the file structure of the present system (a data entity and where to store data will be described later).

In this case, access to a file by the user terminal depends on the protocol used. For example, a file system uses a "path name" for access to a file. NFS uses the "path name" to search for a corresponding "file handle," and subsequently uses the "file handle" to access a file. HTTP uses "URL" for access to a file.

A file is represented by "file-id" in the present system. As described above, "file-id" is an ID (identification information) unique to a file. In the present system, a file entity is a table, which has information such as the length of a file (length) and the arrangement of data (offset). As described above, a table can represent a table that can be recursively placed, and a table can be placed in a table. A table has an interface to acquire a list of component objects (tables or blocks) composing the table (a list of <offset, object-id>). A block represents a data entity in the present system. A block has an interface to access actual data (data existing on a virtual device).

The file structure of the present system is expressed as a "tree structure" in Figure 6. The data structure to represent a file, in the present system, can be a recursive structure. The file structure of the present system can therefore be expressed as a "tree structure" as shown in Figure 6, and a block will be located in a leaf of the tree structure. In this case, an object (a table or a block) can be expressed as a "box" having pieces of information "object-id (table-id or block id)" and "length."

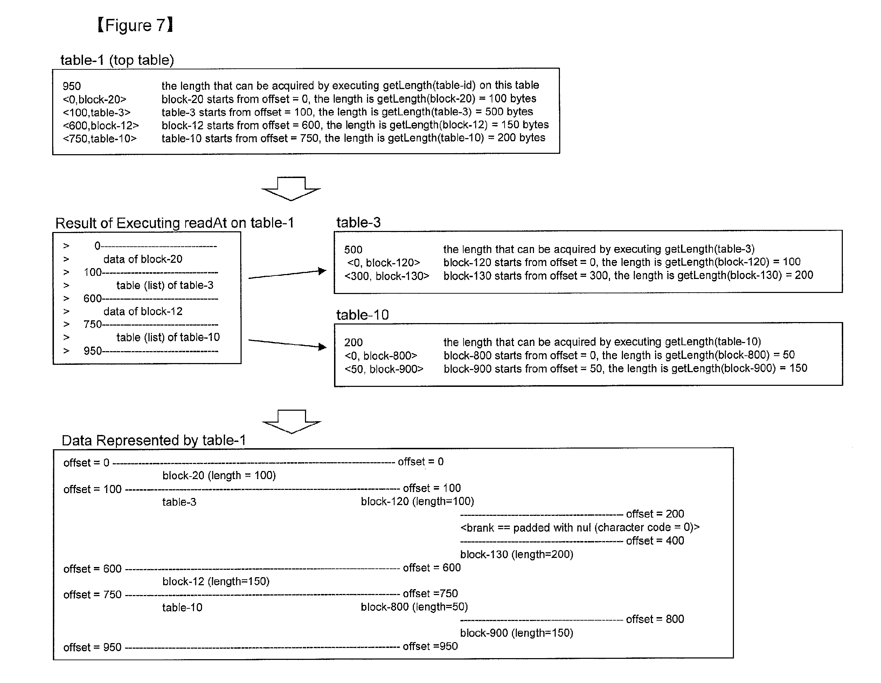

Figure 7 shows a specific example for illustrating the file structure of the present system. A table (a top table) determined by a file object (file-id) in the example shown in Figure 7 is a table with a table ID called "table-1," and it has "length" information "950," and list information "<0, block-20>, <100, table-3>, <600, block-12>, <750, table-10>."

Executing "readAt" on the table "table-1" results in reading 100-byte-long data of "block-20" placed in the location Offset 0, a table (a list) "table-3" placed in the location Offset 100, 150-byte-long data of "block-12" placed in the location Offset 600, and a table (a list) "table-10" placed in the location Offset 750. "readAt" is a command (an interface) to read data. As described above, "Offset" is information indicating the location in a file (the location in relation to the top of the file).

The tables (lists) "table-3" and "table-10" can further be processed with "readAt." In this case, the table "table-3" has "length" information "500" and list information "<0, block-120>, <300, block-130>." Executing "readAt" on this table "table-3" therefore results in reading 100-byte-long data of "block-120" placed in the location areaOffset 0 and 200-byte-long data of "block-130" placed in the location areaOffset 300. The table "table-10" has "length" information "200" and list information "<0, block-800>, <50, block-900>." Executing "readAt" on this table "table-10" therefore results in reading 50-byte-long data of "block-800" placed in the location areaOffset 0 and 150-byte-long data of "block-900" placed in the location areaOffset 50. "areaOffset" is information indicating an offset in an area indicated by the table concerned (the relative location in relation to the top of an area indicated by the table concerned).

As a result, read from the table "table-1" are 100-byte-long data of "block-20" placed in the location Offset 0, 100-byte-long data of "block-120" placed in the location Offset 100 (areaOffset 0), 200-byte-long data of "block-130" placed in the location Offset 400 (areaOffset 300), 150-byte-long data of "block-12" placed in the location Offset 600, 50-byte-long data of "block-800" placed in the location Offset 750 (areaOffset 0), and 150-byte-long data of "block-900" placed in the location Offset 800 (areaOffset 50). The area between Offset 200 and Offset 400 with no data is padded with "NULs."

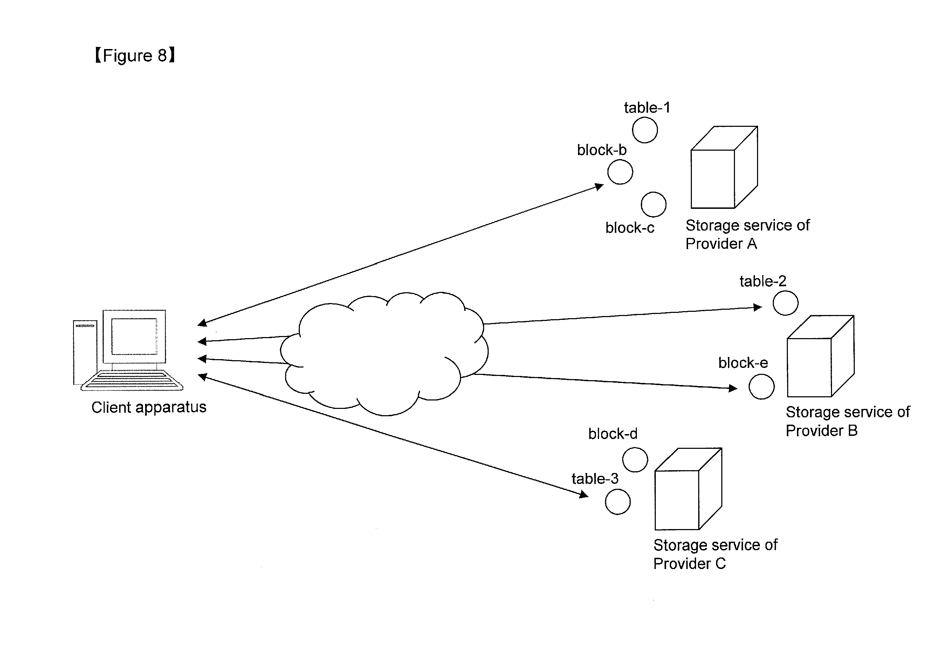

Referring to Figure 8, the mechanism of the present system will next be described. As shown in Figure 8, the present system handles information related to tables and blocks as abstracted objects, and holds the contents on virtual devices (servers or services) on a network. The present system then distributes required information among the virtual devices (servers or services) on the network, thereby eliminating the need to store management information on a particular server and/or a particular area.

The data structure of a file will next be described. A file has unique "file-id" indicating the file. A file is also associated with "table-id" of a table (a top table) for representing the contents of the file. In the present system, information related to the contents of a file is only "table-id" written in the top table, and the details can be obtained by acquiring data recursively from "table-id." As for implementation, a correspondence table between "file-id" and the top table's "table-id," too, may be stored as an object on the network. The length of the file (length) is the same as the length that can be acquired by executing "getLength" on the top table (length). This means "getLength(a certain file object) = getLength(top table of the certain file)." A file may have attribute information (owner, authority to access, date and time of update) and/or management information.

The definition of an object in the present system will next be described. An object has a unique identifier (object-id) to identify the object concerned, and information on the length of data (length). 64-bit integers, UUIDs, and any character strings, for example, may be used as "object-id." "length" is a non-negative integer and is represented by, for example, a 64-bit integer. "length" of an object can be acquired by "getLength." Objects in the present system include blocks and data.

A block is a kind of object, and has pieces of information "block-id" and "length." A block can be called Content. Data of a block (Content) can be acquired by "getContent." A new block can be generated by using "putContent(block-id, content, length)" to provide "block-id," "content," and "length." A block cannot be overwritten.

A table is also a kind of object, and has pieces of information "table-id" and "length." A table has "a list of <offset, object-id>." Note here that "object-id" is "block-id" or "table-id." Data of a table can be acquired by "getTable." A new table can be generated by using "putTable(table-id, <offset, object-id>)" to provide "table-id" and "<offset, object-id>." A table cannot be overwritten. An entry <offset0, object0> can be made on condition that "offset0 ≥ 0 (the value of 'offset' is 0 or greater)," "object0.getLength() > 0 (the value of 'length' of the object concerned is greater than 0)," and "offset0 + object0.getlength() ≤ table.getLength() (the value of 'offset' added with the value of 'length' of the object concerned is the value of 'length' of the table or less)" are all true.

When accessing a block object, the present system, in which "block-id" corresponds to data on a virtual device, uses a "service table (described later)" to determine information required for access to the virtual device and acquire data (and length information) associated with "block-id." When accessing a table object, the present system, in which "table-id" corresponds to information on a virtual device, can acquire information from the virtual device in the same way as for a block. The contents of information that can be acquired in this case, however, are information of the table (i.e. the length of an area in a file represented by the table (length) and a list of <offset, object-id>).

The service table used for access to data described above contains pieces of information "a unique ID number" and "an access means." An means for access to a service provided by a provider is, for example, "http://jigyousya.com/storage/%s." A means for access to a network server is, for example, "10.0.50.11:/users/isi (for NFS)" or "samba://10.0.60.1/public (for CIFS)," and a means for access to a physical device is, for example, "/dev/sd0a." The service table will be detailed later.

Commands (interfaces) used to store and acquire a block (Content) will be described here. "putContent(block-id, length, content)" is used when a block is stored (newly created). In this case, a virtual device is determined from "block-id," and data corresponding to the "block-id" is stored. For this, "HTTP PUT," "NFS WRITE," or other mechanisms to store data appropriate for the virtual device may be used. In the present system, as described above, a block can only be newly stored and cannot be overwritten.

"getContent(block-id)" is used when a block is acquired (data is acquired). In this case, a virtual device is determined from "block-id," and data corresponding to the "block-id" is acquired. For this, "HTTP GET," "NFS READ," or other mechanisms for data storage appropriate for the virtual device may be used. The absence of data corresponding to the "block-id" concerned will result in "ERROR."

While only interfaces to store and acquire a block are defined in the above description, any technique may be used for actual communications depending on virtual devices (services, servers, etc.) as long as it can store or acquire data corresponding to "block-id." For example, "http" may be used for general websites, and "rest," "xml," "xml-rpc," or the like may be used for Web services. "nsf," "webdav," "cifs," "ftp," or the like may be used for network servers, and "iSCSI" or other usual storages may be used for physical devices.

Commands (interfaces) used to store and acquire a table will next be described. "putTable(id, length, list of <offset, object-id>)" is used when a table is stored (newly created). This encodes "length" information and a list of <offset, object-id>. Note here that "object-id" is "block-id" or "table-id." The simplest encoding technique is a method by which these are written as character strings. Examples of encoding techniques include: (1) a technique by which readable character strings represent them (e.g. a technique by which "10" is expressed by a character string "10"); (2) a technique by which they are stored in byte sequences (e.g. a technique by which "int" is stored in a 4-byte sequence and "long" is stored in an 8-byte sequence); and (3) a technique by which data is stored as a "tuple (type, length, data)" sequence.

In this case, a virtual device is determined from "table-id," and encoded data is stored in the "table-id." For this, "HTTP PUT," "NFS WRITE," or other data storage mechanism appropriate for the virtual device may be used. As for implementation, "putContent," which is used to store a block, may be used. In the present system, as described above, a table can only be newly stored and cannot be overwritten.

"getTable(table-id)" is used when information of a table is acquired. In this case, a virtual device is determined from "table-id," and data corresponding to the "table-id" is acquired. For this, "HTTP GET," "NFS READ," or other mechanisms for data storage appropriate for the virtual device may be used. As for implementation, "getContent," which is used to acquire a block, may be used. Decoding acquired information of a table allows "length" and "a list of <offset, object-id>" to be acquired.

This case requires that '''(sub) length' acquired from each 'object-id' should not reach the next 'offset."' "length" of "object-id" located at the last "offset" is required to satisfy that "'length' of the table ≥ the last 'offset' + (sub) length (the value of the last 'offset' added with the value of '(sub) length' is the value of 'length' of the table or less)."

Next, interfaces common to all of files, tables, and blocks (common interfaces) will be described. A common interface for writing is "writeAt." "writeAt" receives "offset," "length," and "a byte sequence of data." If assigned "object-id," "object_offset," "buffer," "bufoff," and "buflen," then "writeAt(object-id, object_offset, buffer, bufoff, buflen)" returns new "object-id" having updated data. A common interface for reading is "readAt." "readAt" receives "offset," "length," and "information on a data area to be read." If assigned "object-id," "object_offset," "buffer," "bufoff," and "buflen," then "readAt(object-id, object_offset, buffer, bufoff, buflen)" copies data read from the area concerned to an area indicated by "buffer," "bufferoff," and "bufferlen," and returns the length of the read data "length."

In this case, "object-id" is "file-id," "table-id," or "block-id." "object_offset" is information indicating the relative location (an offset) in the object concerned. "buffer," "bufoff," and "buflen" are pieces of information indicating a "buffer." Read and write requests express actual receiving and passing of data in the form of data with a byte length of "buflen" starting from the relative location indicated by "bufoff' in a data area starting from a pointer called "buffer." When writing is executed by "writeAt," data to be written is acquired from the above-described data area (buffer area) and the data is written. When reading is executed by "readAt," data is read by copying read data to the above-described data area (buffer area).

While only interfaces common to all of files, tables, and blocks are defined in the above description, actual operations may be defined separately for files, tables, and blocks.

An implementation example of functions of the present system will next be described. The function of creating a new file (CREATE) is implemented by "create." This "create" is an interface to create a new file with no length. The internal process of "create" is to assign a new "file-id" first, set the top table of the "file-id" to "EMPTY_TABLE," and return the "file-id." Note here that "EMPTY_TABLE" is a special table whose length is zero and whose number of list elements is zero. This does not have any actual data and therefore need not be substantial on a virtual device, and only a special object ID (an ID common to all files that indicates an empty table) exists. It can be said that "create" only assigns "file-id."

The function of writing to a file (a file object) (WRITE-1) is implemented by "writeAt(object-id, object_offset, buffer, bufoff, buflen)." In this case, "object-id" is "file-id." This writing to a file involves executing a process of increasing one level in the hierarchical structure (increasing the depth of the tree structure by one level) if "object_offset" is large enough, that is, for example, if "object_offset" is "4 MB x 1000^{d}" or larger for the current depth of the hierarchy, d. At this time, a new table having the "current length" and <0, table-id of top table> is created, and "table-id" of the top table of the file concerned is rewritten. Executing "writeAt(table-id, object_offset, buffer, bufoff, buflen)" on "table-id" associated with a file causes a new assigned "table-id" to be registered as the top table. This causes the special object ID or previous "table-id" to be rewritten to the new "table-id." "writeAt" is required to return the ID of an updated object and, on writing to a file, it will rewrite only the top table and return its own "file-id."

The function of writing to a table (a table object) (WRITE-2) is implemented by "writeAt(object-id, object_offset, buffer, bufoff, buflen)." In this case, "object-id" is "table-id." This writing to a table involves repeating the following processes (1) to (4) as long as "buflen" > 0.

Process (1) involves searching the list for a sub (lower-level) object (table or block) corresponding to "object_offset." For example, a case where "object_offset + bufoff" falls within "offset + getLength()" of each element of the table is searched for.

Process (2), in the absence of a corresponding object, involves executing "createld()" to create "newld," and executing "putContent(newld, writelen, (buffer, bufoff, writelen))" to update the list with the "newld" assigned as a sub object located at "object_offset." Note here that "writelen" is "Min(buflen, (offset of the next object - object_offset))."

Process (3) involves executing "writeAt(child-id, object_offset - child-offset, buffer, bufoff, writelen)" on "child-id" of a corresponding object to update the list with the "newld" assigned as a sub object corresponding to "child-offset." Note here that "child-id" is an ID indicating the corresponding sub object. "child-length" is the length of the sub object (i.e. the length acquired by getLength(child-id)), and "child-offset" is the value of offset of the sub object. "writelen" is "Min(buflen, child-length)."

Process (4) involves updating parameters by substituting "object_offset" with "object_offset + writelen" and "buflen" with "buflen - writelen," regardless of the presence or absence of a corresponding object.

This writing to a table involves substituting "length" with "object_offset + buflen" if "length < object_offset + buflen" is true for the current length, "length." Also involved are, for a resulting list "list" and the above-described "length," executing "createld()" to create "newld," executing "putTable(newld, length, list)," and then returning "newld."

The function of writing to a block (a block object) (WRITE-3) is implemented by "writeAt(object-id, object_offset, buffer, bufoff, buflen)." In this case, "object-id" is "block-id." This writing to a block involves executing a process of reading current data of a block concerned. For example, "currentData" is read by "getContent(object-id)." "currentLength" is the length of the byte sequence (actual data) of this "currentData." Writing to a block involves overwriting a part, starting from "object_offset," of the byte sequence of "currentData" with data of "(buffer, bufoff, min(buflen, currentLength))." Further involved are, for resulting data and the above-described "currentLength," executing "createld()" to create "newld," executing "putContent(newld, currentLength, currentData)," and then returning "newld."

The function of reading from a file (a file object) (READ-1) is implemented by "readAt(object-id, object_offset, buffer, bufoff, buflen)." In this case, "object-id" is "file-id." If "object_offset" is the current length "length" or greater in this reading from a file, "END-OF-FILE" is returned since there is no data to be read. "readAt (table-id, object_offset, buffer, bufoff, min(buflen, length - object_offset))" is executed on "table-id," which is the top table of the file.

The function of reading from a table (a table object) (READ-2) is implemented by "readAt(object-id, object_offset, buffer, bufoff, buflen)." In this case, "object-id" is "table-id." This reading from a table involves repeating the following processes (1) to (4) as long as "buflen" > 0.

Process (1) involves searching the list for a sub (lower-level) object (table or block) corresponding to "object_offset."

Process (2), in the absence of a corresponding object, involves padding an area of "(buffer, bufoff, readlen)" with NUL characters, where "readlen = Min(buflen, (offset of the next object - object_offset))."

Process (3), in the presence of a corresponding object, involves executing "readAt(child-id, object_offset - child-offset, buffer, bufoff, readlen)" on its "child-id." Note here that "child-id" is an ID indicating the corresponding sub object. "child-length" is the length of the sub object (i.e. the length acquired by getLength(child-id)), and "child-offset" is the value of offset of the sub object. "readlen" is "Min(buflen, child-length)."

Process (4) involves updating parameters by substituting "object_offset" with "object_offset + readlen," "buflen" with "buflen - readlen," and "bufoff" with "bufoff + readlen," regardless of the presence or absence of a corresponding object.

The function of reading from a block (a block object) (READ-3) is implemented by "readAt(object-id, object_offset, buffer, bufoff, buflen)." In this case, "object-id" is "block-id." This reading from a block involves executing a process of reading current data of a block concerned. For example, "currentData" is read by "getContent(object-id)." "currentLength" is the length of the byte sequence (actual data) of this "currentData." Reading from a block involves loading "readlen" bytes of data, starting from "object_offset," of the byte sequence of "currentData" into "(buffer, bufoff, readlen)," and then returning "readlen." Note here that "readlen" is "min(buflen, currentLength)."

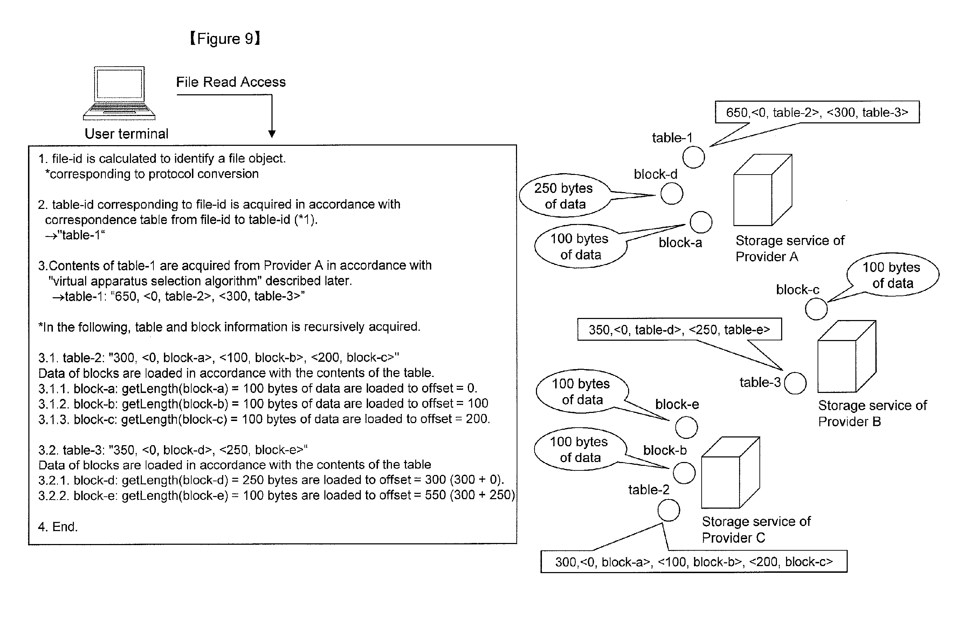

Specific examples of file reading and file writing will next be described. Figure 9 shows an example of file read access in the present system. As shown in Figure 9, if an access to read a file is made by a user terminal, "file-id" to identify a file object is calculated first. Then, "table-id" corresponding to the "file-id" is acquired by using a correspondence table between "file-id" and "table-id." A table ID called "table-1," for example, is acquired here. As for implementation, as previously described, the correspondence table between "file-id" and "table-id," too, may be stored as an object on the network.

The contents of "table-1" are then acquired from Provider A by using a virtual device selection algorithm (described later). The contents "650, <0, table-2>, <300, table-3>," for example, are acquired here. Subsequently, the contents of "table-2" and "table-3" are recursively acquired. In the example of Figure 9, the contents of "table-2" are "300, <0, block-a>, <100, block-b>, <200, block-c>," and the contents of "table-3" are "200, <0, block-d>, <100, block-e>." Then, in accordance with the contents of these tables, 100-byte-long data of "block-a" placed in the location Offset 0, 100-byte-long data of "block-b" placed in the location Offset 100, 100-byte-long data of "block-c" placed in the location Offset 200, 250-byte-long data of "block-d" placed in the location Offset 300 (areaOffset 0), and 100-byte-long data of "block-e" placed in the location Offset 550 (areaOffset 250) are read.

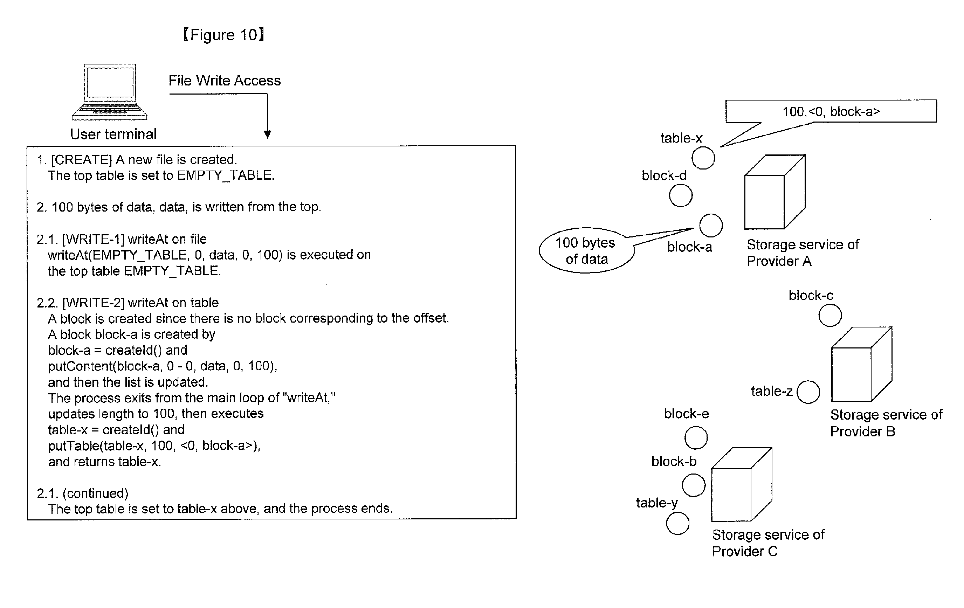

Figures 10 to 14 shows an example of file write access in the present system. Creation of a new file will be described here first. As shown in Figure 10, if an access to write a file is made by a user terminal, a new file is first created by the function of "CREATE." The top table is set to "EMPTY_TABLE" then.

A process of writing 100 bytes of data from the top will next be described. This writing to a file is executed by the function of "WRITE-1." For example, "writeAt(EMPTY_TABLE, 0, data, 0, 100)" is executed on the top table "EMPTY_TABLE." Writing to the table is subsequently executed by the function of "WRITE-2." In this case, a block is created since there is no block corresponding to "offset." For example, a block "block-a" is created by "block-a = createld()" and "putContent(block-a, 0 - 0, data, 0, 100), " and the list is updated. After that, the process exits from the main loop of "writeAt," updates "length" to "100," then executes "table-x = createld()" and "putTable(table-x, 100, <0, block-a>)" and returns "table-x." The top table is then set to this "table-x," and the process ends.

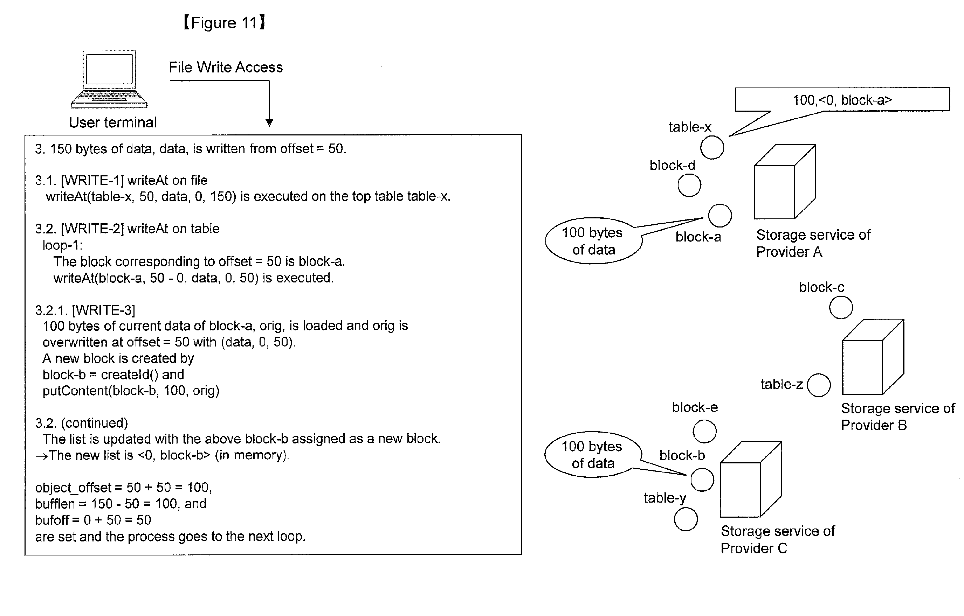

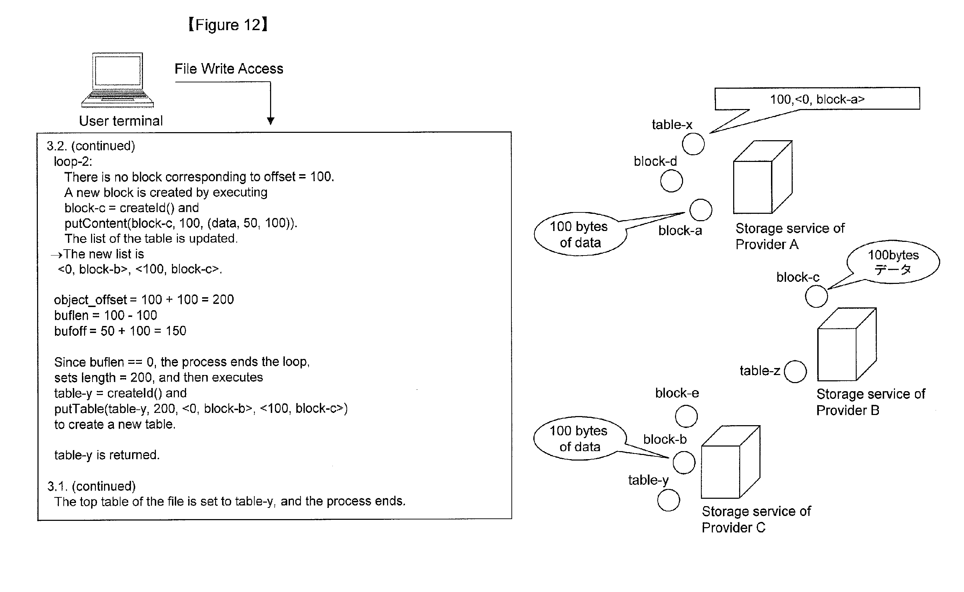

A process of writing "150 bytes" of data from "offset = 50" (data) will next be described with reference to Figures 11 and 12. As shown in Figure 11, writing to a file is first executed by the function of "WRITE-1." In this case, "writeAt(table-x, 50, data, 0, 150)" is executed on the top table "table-x." Secondly, writing to the table is executed by the function of "WRITE-2." In this case, "wiriteAt(block-a, 50 - 0, data, 0, 50)" is executed on a block "block-a" whose "offset" is "50," as a first loop "loop-1." Subsequently, 100-byte "orig" which is current data of "block-a" is loaded and "orig" is overwritten at "offset = 50" with "(data, 0, 50)" by the function of "WRITE-3." After that, a new block is created by "block-b = createld()" and "putContent(block-b, 100, orig)." The list is then updated with the above-described "block-b" assigned as a new block. The resulting new list is <0, block-b>. After that, the process goes to the next loop with "object_offset" set to "50 + 50 = 100," "buflen" to "150 - 50 = 100," and "bufoff" to "0 + 50 = 50."

In the second loop "loop-2," as shown in Figure 12, there is no block whose "offset" is "100," and therefore "block-c = created()" and "putContent(block-c, 100, (data, 50, 100))" are executed to create a new block. This causes the list of the table to be updated, and the new list becomes "<0, block-b>, <100, block-c>." At this time, "object_offset" is set to "100 + 100 = 200," "buflen" is set to "100 - 100," and "bufoff" is set to "50 + 100 = 150." In this case, the loop ends since "buflen" becomes zero. Subsequently, "length" is set to "200," then "table-y = createld()" and "putTable(table-y, 200, <0, block-b>, <100, block-c>)" are executed to create a new table, and "table-y" is returned. After that, the process ends with the top table of the file set to "table-y."

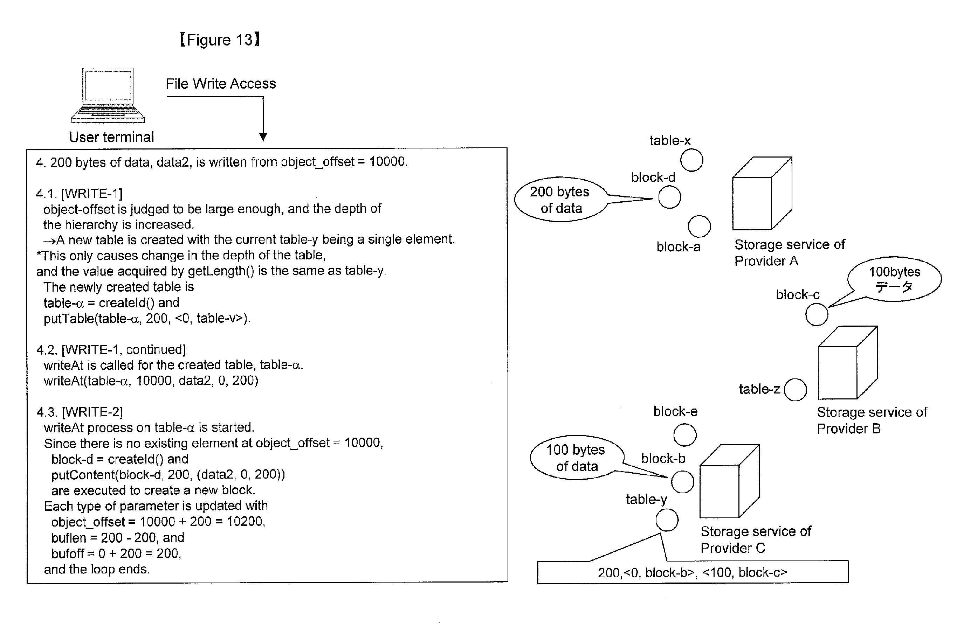

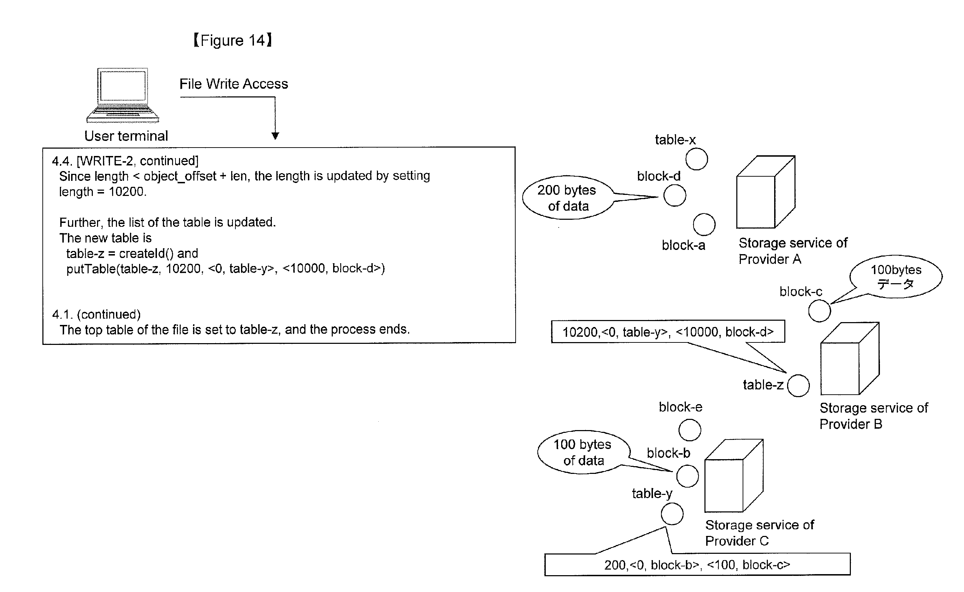

A process of writing "200 bytes" of data from "object_offset = 10000" (data2) will next be described with reference to Figures 13 and 14. As shown in Figure 13, writing to a file is executed by the function of "WRITE-1." In this case, "object-offset" is judged to be large enough, and a process of increasing the depth of the hierarchy is executed. That is, a new table is created with the current "table-y" being a single element. This only causes change in the depth of the table, and the value that can be acquired by "getLength()" is the same as "table-y." "table-α = createld()" and "putTable(table-α, 200, <0, table-v>)" are executed for the newly created table. "writeAt(table-α, 10000, data2, 0, 200)" is then executed on this newly created "table-α."

Subsequently, writing to "table-α" is executed by the function of "WRITE-2." In this case, there is no existing element at "object_offset = 10000," and therefore "block-d = createld()" and "putContent(block-d, 200, (data2, 0, 200))" are executed to create a new block. Each type of parameter is updated after that. In this case, "object_offset" is set to "10000 + 200 = 10200," "buflen" is set to "200 - 200," "bufoff' is set to "0 + 200 = 200," and the loop ends.

In this case, as shown in Figure 14, "length" is set to "10200" to update the length since "length < object_offset + len." In addition, the list of the table is updated. A new table is given by "table-z = created()" and "putTable(table-z, 10200, <0, table-y>, <10000, block-d>)." Finally, the process ends with the top table of the file set to "table-z."

Assignment of new IDs in the present system will be briefly described here. New object IDs are created by "createld" in the present system. It is then required to guarantee uniqueness of object IDs. Uniqueness of object IDs is utilized in service tables. For example, when UUIDs are used, unique 128-bit values are generated with a technique described in RFC. When 64-bit integers are used, "64 bit long generator (original)" may be used.

"Service tables" used in the present system will be described next. When relevant contents are acquired from an object ID (a table ID, a block ID, etc.), the present system uses an algorithm to determine "a service (or a server) storing the contents." The present system therefore requires no provision for any database and huge management table. That is, the present system does not require any dedicated management server or area for management information since a service can be determined by "calculating" with the algorithm.

A service table indicates a method of acquiring an object from an object ID. The present system allows a service (or a server) to be determined from an object ID by an "algorithm" as described above, and a service table is used to acquire information on "means of access" to services (or servers). Service tables include "static" ones with simple implementation and operation, and "dynamic" ones with easy service table update (addition, modification, and removal of services).

A static service table allows a service to be determined by calculating a "hash code" from an object ID and using the remainder left when the calculation result is divided by the number of services, N. A dynamic service table, where each service name (unique name) is converted to a hash value, determines a service whose hash value is closest to an object ID.

Through the use of such a service table (a static or dynamic service table), the present system eliminates the need for a dedicated management table, allows for eliminating a single point of failure in the system, and provides easy backup. Assigning a different service for each object ID enables distributed processing. Time for calculation using the algorithm to determine a service is short (e.g. the processing time is of the order of "O(1)").

Information contained in a service table includes information on service providers, URls or other "location" information, authentication information for using services, or other additional information depending on services. Information on a service provider may be "local" information if the network is its own network. "location" information includes protocol information such as "http, nfs, cifs, ftp, and webdav," and path information such as "%o (replace with an object ID)" and "%u (replace with a user ID)" (information for exchanging parameters as required). Authentication information for using services includes user IDs, passwords, and authentication key information as required. Additional information depending on services includes weight, encryption techniques, and various types of parameters (block size, parallelism, queue size, etc.).

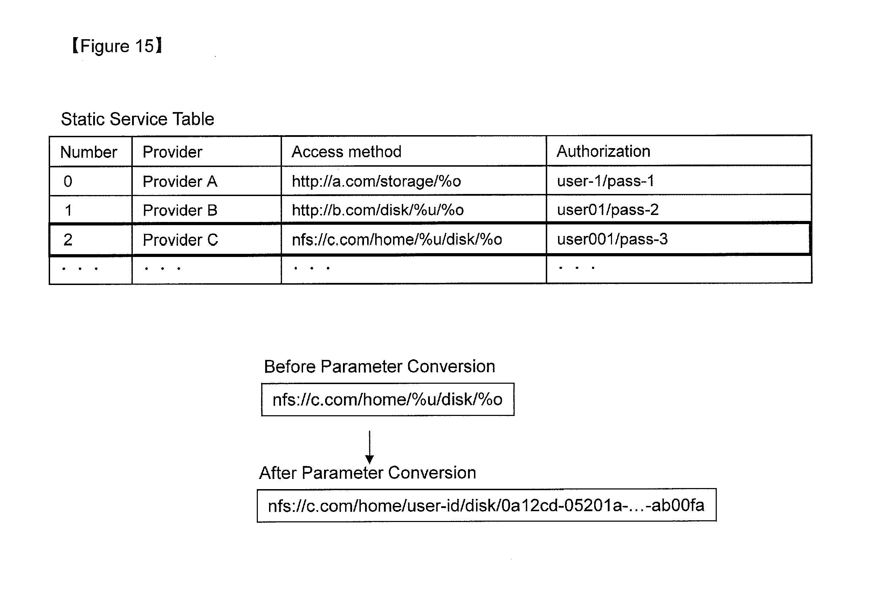

Figure 15 shows an example of a static service table. In this case, a service table having the numbers 0 to (S-1) is created for S services. When a service is determined from an object ID, a hash value (e.g. 13562) is first calculated from the object ID (e.g. 0a12cd-05201a- ... -ab00fa). A service is determined from the remainder left when this hash value is divided by the number of services S. For example, if the number of services is three (i.e. S = 3), then 13562 mod 3 = 2, and the service provider is determined to be "Provider C." The above-described parameter exchange is executed for the access method, and then an access is made to the service of this Provider C.

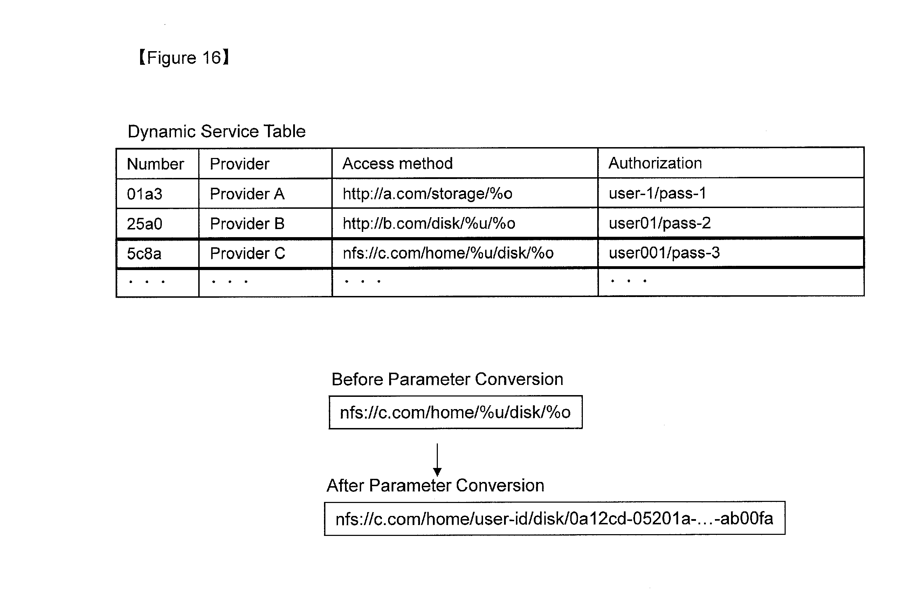

Figure 16 shows an example of a dynamic service table. In this case, an SHA1 hash is calculated for each service to create a service table. When a service is determined from an object ID, an SHA1 hash value (e.g. 60ab) is first calculated from the object ID (e.g. 0a12cd-05201a- ... -ab00fa). A service is then selected that is assigned with a range covering this SHA1 hash value. The above-described parameter exchange is executed for the access method as is the case in Figure 15, and then an access is made to the service.

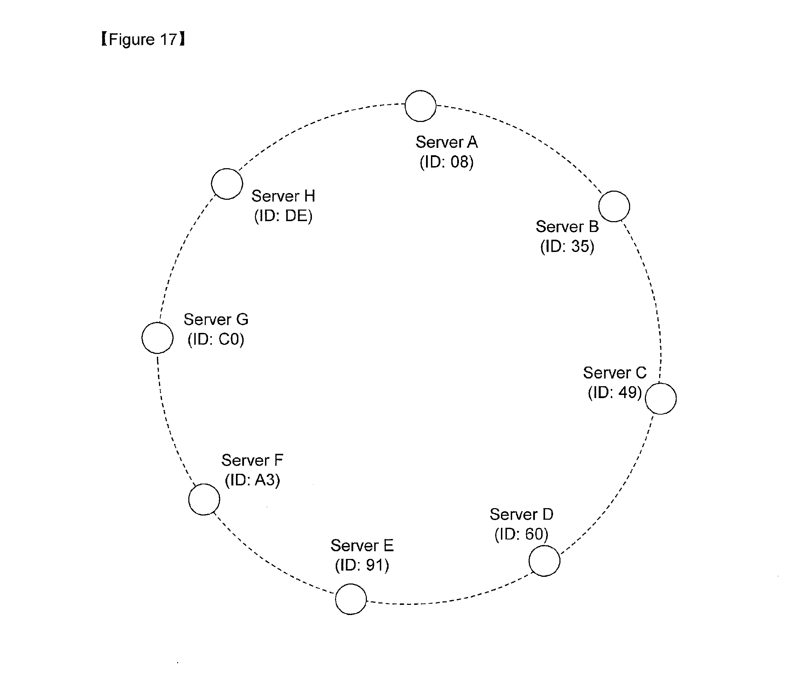

The present system can use a DHT (Distributed Hash Table) as a technique for dynamically adding and removing a service. For example, as shown in Figure 17, suppose that eight servers (Server A to H) providing services are each assigned with key information (ID) and the coverage of each server is determined in advance based on its ID. ID of each server may be determined from part (e.g. the first two digits) of an SHA1 hash value calculated from a unique name of the server. For example, suppose that the coverage of Server A is set "from 08 to 34," the coverage of Server B is set "from 35 to 48," ... Then, since part of the SHA1 hash value (e.g. the first two digits) is "60" for the above object ID, the server to provide a service is determined to be "Server D" (covering "from 60 to 90").

Features of the present system will be described below. One feature of the present system is a random access (random access I/O) capability. The present system allows for data access using a tree structure and for the update, addition, and deletion of data in any location in the processing time of the order of "O(log N)" (where N = file size). A fixed array would restrict the size of a file that can be stored, and a list structure would require the processing time of the order of "O(N)." The present system designates an offset and area to perform an update when writing, and therefore has the advantage that updates are required only for a block requiring an update and for its upper-level table or tables. The present system designates an offset and area to read when reading, and therefore has the advantage that reading is required only for a table and block requiring reading.

The present system is also characterized by the virtually unlimited file size. That is, the file size is virtually unrestricted since there is no fixed-length array and, for example, if the block size is 4 MB and the number of elements per table is 1024, "4MB x 1024 x 1024 x 1024 x 1024 = 4EB" can be expressed with a depth of four. Since the data structure is a tree-type recursive structure, the processing time for searching for, adding, and removing data is of the order of "O(log N)" for the file size N, and thus an access can be made at a practical speed (sufficient speed).

The present system is also characterized in that required minimum management information is only a pair of "file-id" and "table-id." That is, the present system requires only "file-id" indicating a file and "table-id" which is the top thereof and, in terms of implementation, a pair of "file-id" and "table-id" can also be stored as an object on a network. For example, they can be distributed as an object having a single value with "file-id" being a key. Unlike a table or block, a pair of "file-id" and "table-id" is an object that can be overwritten. A service table may be separately managed, to be allowed to include only reference information that is independent of the volume of files or data.

Another feature of the present system is that a sparse file can be easily implemented. A sparse file is "padded with NULs" where space is not used. Therefore, for example, if "readAt" is executed, an area with no data is read as "NUL" data. This allows the logical file size to be increased without using any physical storage capacity. A first advantage of a sparse file is that logically a file of a virtually unlimited size can be created. The structure of a file can be expressed by tables alone, and areas where there is no data are read as "NUL" data. A second advantage of a sparse file is that a block is created only when data is actually written. As for where no data is written, required capacity is minimized (to table information only).

The present system is also characterized by the capability to achieve safe data writing in combination with encryption. Safe data writing can be achieved by a user encrypting an entire file in advance. Any encryption scheme can be used. In the present system, an encrypted file is divided into multiple blocks, which are then stored on a plurality of virtual devices (e.g. service providers) in a distributed way. As for decryption of a file, a file may be decrypted on the user side after it is reconstructed by collecting fragments from virtual devices. This feature allows encrypted data to be stored more safely. In this case, each virtual device will have only fragments of an "encrypted file" and therefore, if virtual devices are service providers, an original file cannot be generated from data of a particular service provider alone.

One feature of the present system is the capability for an atomic update (an indivisible update process without any intermediate state). An update of a file is finalized by an atomic rewrite of "table-id" of its top table. A component of a file, "object-id," is newly created each time, and "table-id" and "block-id" are both assigned with new IDs each time an "update" is performed. That is, once "table-id" is determined, its contents remain the same and will not be changed since then. With such a feature, the present system can get a benefit that "reading can be done during writing." Since a file is always in its "integrity," a file remains unchanged before "table-id" of its top table is rewritten, and the contents of a file become updated immediately after "table-id" of its top table is rewritten. So, "reading can be done during writing" even if a file is not locked. The present system can also get a benefit that "it is easy to take a copy and snapshot." Methods of taking a copy and snapshot include, for example, a method by which "table-id" of an existing file is copied for a new "file-id." This ensures the identity of the contents of an identical "table-id."

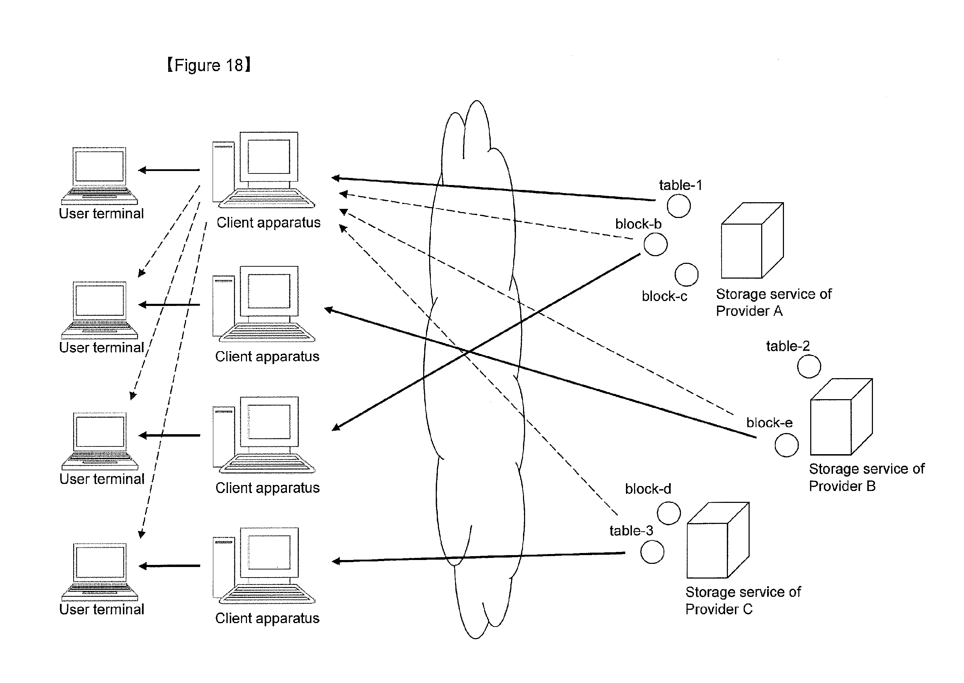

Another feature of the present system is easy distributed processing among clients. As shown by broken lines in Figure 18, sometimes there is a concentration of accesses to one client apparatus for, for example, popular VOD (video on demand), a homepage during an event, or "distributed processing" to analyze large volumes of data. In such cases, it is desirable to process the concentrated accesses in a distributed way. It is desirable to distribute the load also when there are many asynchronous accesses.

The present system arranges a plurality of (multiple) virtual storages ("client apparatuses" described above) such that each of the virtual storages acquires required file information (a pair of file-id and table-id). Distributed processing can therefore be achieved by each of the virtual storages independently accessing a virtual device as shown by solid lines in Figure 18. For example, if the virtual devices are service providers, the load can be distributed among providers. If the virtual devices are servers, the load can be distributed among servers. Individual virtual storages on the front end do not interfere with one another in both cases. The present system also allows load distribution to be easy particularly for a large-volume file. In such a case, accesses are statistically distributed since there are many component tables and blocks. As a result, the present system can achieve an "access distribution" mechanism with extremely high scalability.

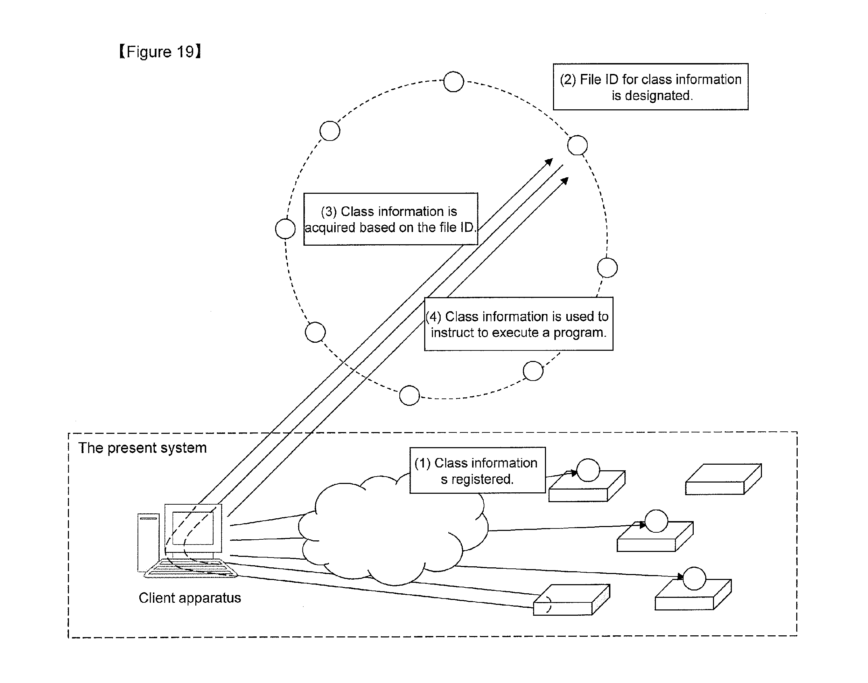

For example, a file stored and managed by the present system may be class information of an object-oriented program, and a program designated by a user of the present system may be allowed to be executed on a server. In that case, a user (a client apparatus) of the present system and a server may share class information, which is the definition of a program. When class information is shared, a user, for example and as shown in Figure 19, registers class information on servers of the present system, informs each server of the file ID, and then instructs to execute the program. Each server can use the file ID to acquire from the present system the class information required to execute the program.

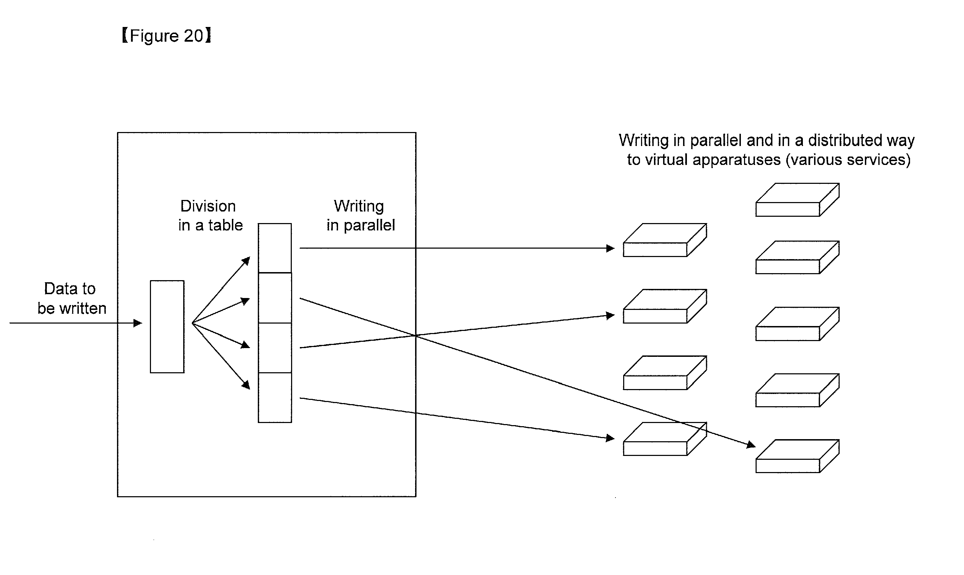

The present system is also characterized by the capability to provide a high throughput through parallel distributed processing. Figure 20 illustrates parallel distributed processing in the present system. As shown in Figure 20, for example, when a table is written to, writing processes can be executed in parallel and in a distributed way for each object (table or block) in a list held by the table. When a table is read from, reading processes can be executed in parallel and in a distributed way for each object (table or block) in a list held by the table. In this way, for example, both processes of writing to/reading from one table can be executed in parallel and in a distributed way for the number of elements of a list in the table, N (e.g. 1024). As a result, the present system allows parallel distributed processing to work more effectively as the file size becomes larger, and thus can achieve a high throughput.

The present system is characterized by its approach to implementing duplication and redundancy. The method of achieving redundancy in the present system is "to make copies to a plurality of virtual devices." That is, an object (a table or block) is copied to a plurality of virtual devices when writing is executed, and an object is read from one of the above virtual devices when reading is executed. A service table can be used for selection of virtual devices to which copies are made. "A virtual device next" to a virtual device on which an object is to be stored originally is selected in the present system. In this case, a plurality of virtual devices are selected according to the redundancy (= multiplicity = the number of copies). If the service table is a static one, "a next virtual device" is determined based on the remainder left when divided by N. For example, "the remainder left when n is divided by N, the remainder left when (n-1) is divided by N, the remainder left when (n-2) is divided by N, ..." are determined as relevant virtual devices. If the service table is a dynamic one, a server previous to a relevant virtual device is determined as a relevant virtual device. In the writing process, data of the same object is written to all relevant virtual devices. In the reading process, reading is executed in succession on relevant virtual devices and, when there is a first response, it is used as data to be loaded. Alternatively, reading is executed in parallel on relevant virtual devices, and the earliest response is used as data to be loaded.

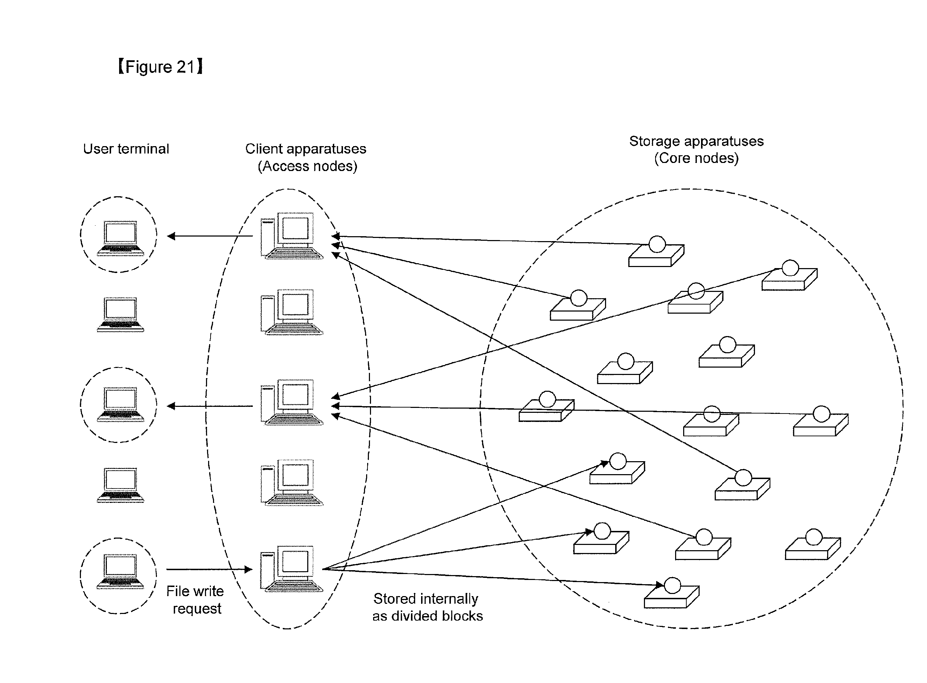

Figure 21 illustrates a feature of the present system. As shown in Figure 21, storing a file as multiple blocks and accessing them in parallel, the present system can achieve access performance and storage capacity proportional to the number of storage apparatuses. In this case, client apparatuses (which can also be called access nodes) can be increased in number depending on access performance. Storage apparatuses (which can also be called core nodes) can be added in a scalable way depending on the capacity. In other words, the present system may be said to use a sophisticated distributed computing technique to allow both performance and capacity to be in proportion to the number of apparatuses, which may contribute to easy expansion (scale out).

While there have been described embodiments of the invention, the invention is not limited by the description herein and it is a matter of course that various changes and applications may be made thereto by those skilled in the art within the scope of the invention.

### INDUSTRIAL APPLICABILITY

As stated above, the storage service provision apparatus of the invention is useful since it can be used for, for example, storage services or other cloud services.

### DESCRIPTION OF THE SYMBOLS

1: Distributed storage service provision system (the present system)
2: User terminal
3: Client apparatus (Storage service provision apparatus)
4: Storage apparatus
5: Communications unit
6: Read/write processor unit
7: Service table memory unit
8: Communications unit
9: File object manager unit
10: File object storage unit

## Claims

1. A storage service provision apparatus to be connected with a plurality of storage apparatuses over a network for providing a service to store a file by use of the storage apparatuses, the storage service provision apparatus comprising:
means for dividing a file to be written into one or more pieces of data and, handling a data component of the file as a block object, assigning object identification information to each block object;
means for creating information for constructing the file using data of each block object and, handling the information as a management information object, assigning object identification information to the management information object;
means for determining at least one of the plurality of storage apparatuses based on object identification information; and
means for transmitting each block object and the management information object to their respective storage apparatuses determined based on their own object identification information, to make them stored there.

2. The storage service provision apparatus according to claim 1, further comprising:
means for determining top object identification information corresponding to a file to be read, and accessing a storage apparatus determined based on the top object identification information to acquire the management information object;
means for using information for constructing the file contained in the acquired management information object to determine object identification information of a block object having a data component of the file, and accessing a storage apparatus determined based on the object identification information to acquire the block object; and
means for arranging pieces of data contained in acquired block objects in accordance with the information for constructing the file, thereby acquiring the file.

3. The storage service provision apparatus according claims 1 to 2, wherein object identification information for determining a storage apparatus is assigned such that a management information object corresponding to one file and a management information object corresponding to another file are stored on different ones of the plurality of storage apparatuses.

4. The storage service provision apparatus according to one of claims 1 to 3,
wherein the means for determining at least one of the plurality of storage apparatuses based on object identification information also determines an access method applicable to a determined storage apparatus, and
wherein usage of a storage apparatus connected over the network is performed by requesting the determined storage apparatus for storage or acquisition of the object assigned with the object identification information in accordance with the determined access method.

5. The storage service provision apparatus according to one of claims 1 to 4, wherein each of the plurality of storage apparatuses is a storage server that can operate with the storage service provision apparatus as a client over an optionally-selected access protocol.

6. The storage service provision apparatus according to one of claims 1 to 5, wherein one and another of the plurality of storage apparatuses are of storage services provided by different service providers.

7. The storage service provision apparatus according to one of claims 1 to 6, further comprising
means for receiving from a user terminal a write or read request for a file stored by use of the plurality of storage apparatuses,
wherein the write or read request is a request of a type used in general-purpose file systems.

8. The storage service provision apparatus according to one of claims 1 to 7, wherein the management information object contains: pieces of object identification information of a plurality of block objects having pieces of data composing different parts of a file; and offset information indicating which parts of the file the pieces of data of respective block objects are to be placed in.

9. The storage service provision apparatus according to one of claims 1 to 8, wherein the management information object includes:
a first management information object containing: pieces of object identification information of a plurality of block objects having pieces of data composing different parts of one area in a file; and in-area offset information indicating which parts of the one area the pieces of data of respective block objects are to be placed in; and
a second management information object containing: object identification information of the first management information object; and in-file offset information indicating where the one area, on which the first management information object has information, is located in the file.

10. The storage service provision apparatus according to one of claims 1 to 9,
wherein the management information object can comprise a plurality of management information objects having a recursive structure, and
wherein if the number of the block objects is larger than a predetermined number, the depth of the recursive structure is increased to generate a plurality of management information objects.

11. The storage service provision apparatus according to one of claims 1 to 10,
wherein the management information object contains a plurality of pieces of object identification information, and
wherein a process to request a storage apparatus determined based on one of the plurality of pieces of object identification information for storage or acquisition of the one object and a process to request a storage apparatus determined based on another one of the plurality of pieces of object identification information for storage or acquisition of the another one object are performed in parallel.

12. The storage service provision apparatus according to one of claims 1 to 11, wherein when part of data of a stored file is updated, a block object whose data is rewritten is assigned with new object identification information, a management information object containing information for constructing the file from data of the block object is also assigned with new object identification information, and the new object identification information of the management information object is set so as to be determined as top object identification information corresponding to the file, whereby the contents of an object having an identical object identification information are managed to remain unchanged.

13. The storage service provision apparatus according to one of claims 1 to 12,
wherein the means for determining at least one of the plurality of storage apparatuses based on object identification information can determine two or more storage apparatuses, and
wherein the storage service provision apparatus further comprises means for copying each block object and the management information object, and transmitting them to their respective two or more storage apparatuses determined based on their own object identification information, to make them stored there.

14. The storage service provision apparatus according to onen of claims 1 to 13, further comprising:
means for, based on respective object identification information of a management information object and each block object corresponding to a file to be read, determining two or more of the plurality of storage apparatuses storing a relevant object or a copy thereof; and
means for accessing one determined storage apparatus and, if there is no response therefrom, accessing another determined storage apparatus to acquire an object or a copy thereof.

15. The storage service provision apparatus according to one of claims 1 to 14, further comprising:
means for, based on respective object identification information of a management information object and each block object corresponding to a file to be read, determining two or more of the plurality of storage apparatuses storing a relevant object or a copy thereof; and
means for accessing two or more determined storage apparatuses in parallel, and acquiring an object or a copy thereof from a storage apparatus that has responded earlier.

16. The storage service provision apparatus according to one of claims 1 to 15,
wherein when data is partially written to a stored file, which part of the file the data to be written is to be placed in is specified, and
wherein objects related to the specified part are selected or new objects are generated among all block objects and management information objects belonging to the file, storage apparatuses respectively determined based on object identification information of the selected or newly generated objects are accessed, and storage apparatuses for other objects are not accessed.

17. The storage service provision apparatus according to one of claims 1 to 16,
wherein when data is partially read from a stored file, which part of the file the data to be read is placed in is specified, and
wherein objects related to the specified part are selected among all block objects and management information objects belonging to the file, storage apparatuses respectively determined based on object identification information of the selected objects are accessed, and storage apparatuses for other objects are not accessed.

18. The storage service provision apparatus according to one of claims 1 to 17,
wherein the file to be written has been created by a user encrypting an entire original file and is divided into a plurality of pieces of data, and
wherein object identification information for determining a storage apparatus is assigned such that a block object having one piece of data and a block object having another piece of data of the plurality of pieces of data are stored on different ones of the plurality of storage apparatuses.

19. The storage service provision apparatus according to one of claims 1 to 18,
wherein the file to be written has been created by a user encrypting an entire original file and is divided into a plurality of pieces of data, and
wherein object identification information for determining a storage apparatus is assigned such that a block object having one piece of data of the plurality of pieces of data and the management information object are stored on different ones of the plurality of storage apparatuses.

20. The storage service provision apparatus according to one of claims 1 to 19,
wherein the management information object contains: object identification information of a block object having data composing part of a file; and offset information indicating which part of the file the data of the block object is to be placed in,
wherein when there is a part of the file where no data exists, no block object corresponding to the part where no data exists is generated, whereas a block object having substantial data and the management information object are made to be stored, and
wherein when a file is read and if the management information object indicates that there is no object identification information corresponding to one part of the file, the file is acquired by placing NUL data in the one part.

21. The storage service provision apparatus according to one of claims 1 to 20,
wherein the management information object contains: object identification information of a block object having data composing part of a file; and offset information indicating which part of the file the data of the block object is to be placed in,
wherein when there is a part of the file where no data exists following a part where data exists, a block object having the substantial data and information on the length of the data and the management information object are made to be stored, and
wherein when a file is read and if the length of data to be placed in one part of the file as indicated by the management information object is longer than the length of data indicated by information on the length contained in a block object corresponding to the one part, the file is acquired by placing NUL data for the shortage of length.

22. The storage service provision apparatus according to one of claims 1 to 21,
wherein a management information object assigned with top object identification information determined corresponding to a file to be read contains: information on the entire length of the file; and information indicating which part of the file having the length an object assigned with which object identification information is placed in,
wherein if the object assigned with object identification information is also a management information object, the management information object contains:
information on the length of an area where the object is placed in the file; and information indicating which part of the area having the length an object assigned with which object identification information is placed in, and
wherein if the object assigned with object identification information is a block object, the block object has: a data component of the file; and information on the length of the data.

23. The storage service provision apparatus according to one of claims 1 to 22, wherein when part of data of a stored file is updated, a block object whose data is to be rewritten and a management information object containing object identification information of the block object, among block objects and management information objects belonging to the file, are acquired from storage apparatuses storing respective objects and, among the contents of each acquired object, a part not to be changed by the data rewrite is left intact whereas data is written to a part to be changed, whereby each new object is generated and made to be stored on a storage apparatus determined based on object identification information of the each new object.

24. The storage service provision apparatus according to one of claims 1 to 23, wherein the means for assigning object identification information uniquely assigns new object identification information to all block objects and management information objects stored on the plurality of storage apparatuses.

25. The storage service provision apparatus according to one of claims 1 to 24, wherein the means for determining at least one of the plurality of storage apparatuses based on object identification information comprises determining one of the plurality of storage apparatuses in accordance with the value of the remainder left when the result of a predetermined calculation made on the value of the object identification information is divided by the number of the plurality of storage apparatuses.

26. The storage service provision apparatus according to one of claims 1 to 24, wherein the means for determining at least one of the plurality of storage apparatuses based on object identification information comprises having each of the plurality of storage apparatuses assigned with a range of value to be covered by the each storage apparatus, comparing the result of a predetermined calculation made on the value of the object identification information and a range of value to be covered by each storage apparatus, and thereby determining one of the plurality of storage apparatuses.

27. The storage service provision apparatus according to claim 26, wherein when a storage apparatus connected over the network is added or removed, the means for determining at least one of the plurality of storage apparatuses based on object identification information changes the determination method such that the added storage apparatus is to be determined for some of a plurality of pieces of object identification information or that the removed storage apparatus is to be determined for no object identification information.

28. The storage service provision apparatus according to one of claims 1 to 27, further comprising means for storing top object identification information corresponding to a file to be read,
wherein a storage apparatus to be accessed first for the file is determined based on the stored top object identification information.

29. The storage service provision apparatus according to one of claims 1 to 27, further comprising means for determining at least one of the plurality of storage apparatuses based on identification information of a file to be read,
wherein a thus determined storage apparatus stores top object identification information corresponding to the file to be read as a kind of a management information object.

30. The storage service provision apparatus according to one of claims 1 to 27, further comprising means for connecting over a network with an attribute management apparatus that stores top object identification information corresponding to each file along with file attribute information,
wherein top object identification information corresponding to a file to be read is acquired from the attribute management apparatus, and a storage apparatus to be accessed first for the file is determined based on the acquired top object identification information.

31. A system comprising a client apparatus and a plurality of storage apparatuses connected with the client apparatus over a network, the client apparatus providing a user with a file storage service,
wherein the plurality of storage apparatuses comprise means for storing for each file a plurality of block objects and one or more management information objects individually assigned with object identification information, each of the plurality of block objects having a respective data component of the file divided into a plurality of pieces of data, the management information objects having information for constructing the file using data of each block object, and
wherein the client apparatus comprises:
means for determining top object identification information corresponding to a file to be read, and accessing a storage apparatus determined based on the top object identification information to acquire the management information object;
means for using information for constructing the file contained in the acquired management information object to determine object identification information of a block object having a data component of the file, and accessing a storage apparatus determined based on the object identification information to acquire the block object; and
means for arranging pieces of data contained in acquired block objects in accordance with the information for constructing the file, thereby acquiring the file.

32. The system according to claim 31,
wherein the system has a plurality of client apparatuses,
wherein the management information object contains a plurality of pieces of object identification information, and
wherein each of the plurality of client apparatuses is set to be able to determine the top object identification information corresponding to the file to be read and, independently of the other client apparatuses, performs a process of requesting acquisition of the management information object based on the top object identification information and a process of requesting acquisition of each object based on the plurality of pieces of object identification information.

33. A method for using a computer connected with a plurality of storage apparatuses over a network to provide a service to store a file by use of the storage apparatuses, the service provision method comprising:
dividing a file to be written into one or more pieces of data and, handling a data component of the file as a block object, assigning object identification information to each block object;
creating information for constructing the file using data of each block object and, handling the information as a management information object, assigning object identification information to the management information object; and
transmitting each block object and the management information object to their respective storage apparatuses of the plurality of storage apparatuses determined based on their own object identification information, to make them stored there.

34. A method for using a computer connected to a plurality of storage apparatuses over a network to provide a service to acquire a file stored by use of the storage apparatuses,
a plurality of block objects and one or more management information objects individually assigned with object identification information being stored for each file,
each of the plurality of block objects having a respective data component of the file divided into a plurality of pieces of data, the management information objects having information for constructing the file using data of each block object,
the service provision method comprising:
determining top object identification information corresponding to a file to be read, and accessing a storage apparatus determined based on the top object identification information to acquire the management information object;
using information for constructing the file contained in the acquired management information object to determine object identification information of a block object having a data component of the file, and accessing a storage apparatus determined based on the object identification information to acquire the block object; and
arranging pieces of data contained in acquired block objects in accordance with the information for constructing the file, thereby acquiring the file.

35. A program for causing a computer connected with a plurality of storage apparatuses over a network to operate as an apparatus for providing a service to store a file by use of the storage apparatuses, the service provision program comprising:
a program code for dividing a file to be written into one or more pieces of data and, handling a data component of the file as a block object, assigning object identification information to each block object;
a program code for creating information for constructing the file using data of each block object and, handling the information as a management information object, assigning object identification information to the management information object; and
a program code for transmitting each block object and the management information object to their respective storage apparatuses of the plurality of storage apparatuses determined based on their own object identification information, to make them stored there.

36. A program for causing a computer connected with a plurality of storage apparatuses over a network to operate as an apparatus for providing a service to acquire a file stored by use of the storage apparatuses,
a plurality of block objects and one or more management information objects individually assigned with object identification information being stored for each file,
each of the plurality of block objects having a respective data component of the file divided into a plurality of pieces of data, the management information objects having information for constructing the file using data of each block object,
the service provision program comprising:
a program code for determining top object identification information corresponding to a file to be read, and accessing a storage apparatus determined based on the top object identification information to acquire the management information object;
a program code for using information for constructing the file contained in the acquired management information object to determine object identification information of a block object having a data component of the file, and accessing a storage apparatus determined based on the object identification information to acquire the block object; and
a program code for arranging pieces of data contained in acquired block objects in accordance with the information for constructing the file, thereby acquiring the file.
